# EUROPEAN PATENT APPLICATION

(11) **EP 4 596 514 A1**
(43) Date of publication of application: **06.08.2025**
(21) Application number: 23872560.0
(22) Date of filing: 28.09.2023
(51) Int. Cl.: C03C 27/12, B32B 17/10, B60J 1/02

(54) **LAMINATED GLASS INTERLAYER FILM, LAMINATED GLASS, AND MANUFACTURING METHOD FOR SAME**

(30) Priority: 30.09.2022 JP 2022158983
(71) Applicant: SEKISUI CHEMICAL CO., LTD., Osaka-shi Osaka 530-8565 (JP)
(72) Inventor: ISHIDA, Jun, 6045JB Roermond (NL)
(74) Representative: Ter Meer Steinmeister & Partner
(86) International application number: PCT/JP2023/035519
(87) International publication number: WO 2024/071340

(57) **Abstract**

An interlayer film for laminated glass including an onboard sensor region (11), wherein a maximum amount of deviation of a partial wedge angle with respect to an approximate straight line (L1) of the partial wedge angle in the onboard sensor region (11) is 0.2 mrad or less.

## Description

### Technical Field

The present invention relates to an interlayer film for laminated glass for use in laminated glass.

### Background Art

Laminated glass is widely used for window glass for vehicles such as automobiles because it is safe and does not cause glass shards to scatter even if damaged by an external impact. An integrated laminated glass in which an interlayer film for laminated glass containing a resin component such as polyvinyl acetal resin is interposed between a pair of glass sheets is widely known.

In recent years, the introduction of head-up displays (HUDs) has been increasing, in which predetermined information is displayed in the field of vision of the driver, for example, by reflecting an image on the window glass of the windshield or the like of the automobile. Images displayed on the HUD may be visually recognized as double images (so-called "reflected double images") due to light rays emitted from the light source of the HUD being reflected by the inner and outer surfaces of the windshield.

Conventionally, for the purpose of reducing reflected double images, it is known to use a wedge-shaped interlayer film having a predetermined wedge angle as the interlayer film for laminated glass. Various improvements have been made to laminated glass having a wedge-shaped interlayer film in order to reduce reflected double images. For example, it is known to change the wedge angle depending on the position in the thickness direction in the HUD image region where the HUD image of the windshield is displayed (for example, see PTL1).

Further, in recent years, the installation rate of onboard sensors has been increasing in order to enhance safety and for the purpose of autonomous driving. Onboard sensors generally capture images in front of the automobile through the windshield.

### Citation List

### Patent Literature

PTL1: JP 2017-502124 A

### Summary of Invention

### Technical Problem

Some of the light rays guided from outside the automobile to an onboard sensor are refracted without being reflected by the outer surface and the inner surface of the windshield and are incident on the onboard sensor, and some of the light rays are reflected from the inner surface and outer surface of the windshield and are incident on the onboard sensor. As a result, double images (so-called "transmitted double images") are detected, which may reduce detection accuracy. However, conventionally, prevention of transmitted double images detected by an onboard sensor has not been sufficiently studied in relation to interlayer films for laminated glass.

The present invention has been made in view of the above problem, and an object of the present invention is to provide an interlayer film for laminated glass that can reduce double images detected by an onboard sensor and enhance the detection accuracy of the onboard sensor.

### Solution to Problem

As a result of extensive studies, the present inventor has found that the above-described problem can be solved by, in an onboard sensor region or a region (region A) presumed to serve as an onboard sensor region when used for laminated glass, setting a maximum amount of deviation of a partial wedge angle with respect to an approximate straight line L1 of the partial wedge angle to a certain value or less, thereby completing the invention. That is, the present invention provides the following [1] to [25].
[1] An interlayer film for laminated glass including an onboard sensor region, wherein a maximum amount of deviation of a partial wedge angle with respect to an approximate straight line L1 of the partial wedge angle in the onboard sensor region is 0.2 mrad or less.
[2] An interlayer film for laminated glass having a length of 740 mm or more from one edge to the other edge, wherein a maximum amount of deviation of a partial wedge angle with respect to an approximate straight line L1 of the partial wedge angle in a region A having a size of 100 to 200 mm at least one region in a range of 600 to 1000 mm from the one edge toward the other edge is 0.2 mrad or less.
[3] The interlayer film for laminated glass according to the above [1] or [2], wherein the approximate straight line L1 has a slope of 0.7 mrad/100 mm or less.
[4] The interlayer film for laminated glass according to any of the above [1] to [3], wherein an average value of the partial wedge angle in the onboard sensor region or the region A is 0.1 mrad or more.
[5] The interlayer film for laminated glass according to any of the above [1] to [4], wherein an average value of the partial wedge angle in the onboard sensor region or the region A is -0.05 mrad or more and less than 0.05 mrad.
[6] The interlayer film for laminated glass according to any of the above [1] to [5], wherein an average value of the partial wedge angle in the onboard sensor region or the region A is less than -0.1 mrad.
[7] The interlayer film for laminated glass according to any of the above [1] to [6], wherein the interlayer film includes a part where the partial wedge angle changes in a region outside the onboard sensor region or a region outside the region A.
[8] The interlayer film for laminated glass according to any of the above [1] and [3] to [7], wherein the interlayer film includes a HUD display region, and has a part where the partial wedge angle changes outside the HUD display region.
[9] The interlayer film for laminated glass according to any of the above [2] to [7], wherein the interlayer film includes a part where the partial wedge angle changes outside a region B that has a size of 200 to 500 mm at least one region in a range of 100 to 600 mm from the one edge toward the other edge.
[10] The interlayer film for laminated glass according to any of the above [1] and [3] to [8], wherein
   the interlayer film includes a HUD display region, and
   an absolute value of a difference between an average value of the partial wedge angle in the HUD display region and an average value of the partial wedge angle in the onboard sensor region is 0.01 mrad or more.
[11] The interlayer film for laminated glass according to any of the above [2] to [7] and [9], wherein an absolute difference between an average value of the partial wedge angle in a region B that has a size of 200 to 500 mm at least one region in a range of 100 to 600 mm from the one edge toward the other edge and an average value of the partial wedge angle in the region A is 0.01 mrad or more.
[12] The interlayer film for laminated glass according to any of the above [1], [3] to [8], and [10], wherein
   the interlayer film includes a HUD display region, and
   when, in the HUD display region, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where an absolute value of a slope of the approximate straight line L2 is less than 0.005 mrad/100 mm.
[13] The interlayer film for laminated glass according to any of the above [2] to [7], [9], and [11], wherein when, in a region B that has a size of 200 to 500 mm at least one region in a range of 100 to 600 mm from the one edge toward the other edge, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where an absolute value of a slope of the approximate straight line L2 is less than 0.005 mrad/100 mm.
[14] The interlayer film for laminated glass according to any of the above [1], [3] to [8], [10], and [12], wherein
   the interlayer film includes a HUD display region, and
   when, in the HUD display region, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where a slope of the approximate straight line L2 is -0.005 mrad/100 mm or less.
[15] The interlayer film for laminated glass according to any of the above [2] to [7], [9], [11], and [13], wherein when, in a region B that has a size of 200 to 500 mm at least one region in a range of 100 to 600 mm from the one edge toward the other edge, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where a slope of the approximate straight line L2 is -0.005 mrad/100 mm or less.
[16] The interlayer film for laminated glass according to any of the above [1] to [15], wherein an approximate straight line L4 of the partial wedge angle of the overall interlayer film from the one edge to the other edge has a positive or negative slope.
[17] The interlayer film for laminated glass according to any of the above [1], [3] to [8], [10], [12], [14], and [16], wherein
   the interlayer film includes a HUD display region, and
   when, in the HUD display region, a region is selected in a range of 50 mm toward one edge direction and the other edge direction from each point as a center, and an approximate straight line of the partial wedge angle in the region is taken as an approximate straight line L2 of the partial wedge angle of each point, a maximum absolute value of a difference between partial wedge angles with respect to the approximate straight line L2 at each point is 0.2 mrad or less.
[18] The interlayer film for laminated glass according to any of the above [2] to [7], [9], [11], [13], [15], and [16], wherein when, in a region B that has a size of 200 to 500 mm at least one region in a range of 100 to 600 mm from the one edge toward the other edge, a region is selected in a range of 50 mm toward one edge direction and the other edge direction from each point as a center, and an approximate straight line of the partial wedge angle in the region is taken as an approximate straight line L2 of the partial wedge angle of each point, a maximum absolute value of a difference between partial wedge angles with respect to the approximate straight line L2 at each point is 0.2 mrad or less.
[19] The interlayer film for laminated glass according to any of the above [1], [3] to [8], [10], [12], [14], [16], and [17], wherein
   the interlayer film does not include a HUD display region, and
   the difference of an average value of the partial wedge angle in a region from the one edge to the onboard sensor region toward the other edge of the interlayer film for laminated glass and an average value of the partial wedge angle in the onboard sensor region is 0.001 mrad or more.
[20] The interlayer film for laminated glass according to any of the above [1] to [19], wherein
   the interlayer film includes a colored region with a visible light transmittance of less than 60%, and
   an average value of the partial wedge angle in the colored region is 0.6 mrad or less.
[21] The interlayer film for laminated glass according to any of the above [1] to [20], wherein on at least one surface, a ten-point average roughness (Rzjis94) is 1 µm or more and less than 100 µm, and an absolute value of a difference between the maximum value and the minimum value of the ten-point average roughness is less than 40 µm.
[22] Laminated glass including:
   the interlayer film for laminated glass according to any of the above [1] to [21];
   a first laminated glass member; and
   a second laminated glass member,
   wherein the interlayer film for laminated glass is arranged between the first laminated glass member and the second laminated glass member.
[23] The laminated glass according to the above [22], wherein a difference between a thickness of the first laminated glass member and a thickness of second laminated glass member is 0.1 mm or more.
[24] A method for producing the interlayer film for laminated glass according to any of the above [1] to [21], wherein the interlayer film for laminated glass is formed by extrusion molding.
[25] A method for producing the laminated glass according to the above [22] or [23], wherein the laminated glass is obtained by sandwiching the interlayer film for laminated glass between the two laminated glass members and pressure-bonding the laminated glass members together.

### Advantageous Effects of Invention

According to the interlayer film for laminated glass of the present invention, it is possible to reduce double images detected by an onboard sensor and enhance a detection accuracy of the onboard sensor.

### Brief Description of Drawings

[Fig. 1] Fig. 1 is a schematic front view showing an example of an interlayer film for laminated glass according to a first embodiment.
[Fig. 2] Fig. 2 is a schematic partial cross-sectional view showing an example of the interlayer film for laminated glass when used for laminated glass, with a lower side being one edge side and an upper side being the other edge side.
[Fig. 3] Fig. 3 is a series of graphs showing a relationship between a design profile DP, an actual measured profile AP, and an approximate straight line L1 in an onboard sensor region.
[Fig. 4] Fig. 4 is a series of graphs showing a relationship between the design profile DP, the actual measured profile AP, and an approximate straight line L2 in an HUD display region.
[Fig. 5] Fig. 5 is a schematic diagram for illustrating a method of calculating a wedge angle at each position in a vertical direction.
[Fig. 6] Fig. 6 is a schematic diagram for illustrating a method of calculating the approximate straight line L2.
[Fig. 7] Fig. 7 is a schematic front view showing an example of the interlayer film for laminated glass according to the first embodiment.
[Fig. 8] Fig. 8 is a schematic front view showing an example of the interlayer film for laminated glass according to the first embodiment.
[Fig. 9] Fig. 9 is a schematic front view showing an example of the interlayer film for laminated glass according to the first embodiment.
[Fig. 10] Fig. 10 is a schematic front view showing an example of the interlayer film for laminated glass according to the first embodiment.
[Fig. 11] Fig. 11 is a schematic cross-sectional view showing an example of the interlayer film for laminated glass when used for laminated glass.
[Fig. 12] Fig. 12 is a schematic cross-sectional view showing an example of the interlayer film for laminated glass when used for laminated glass.
[Fig. 13] Fig. 13 is a schematic front view showing an example of an interlayer film for laminated glass according to a second embodiment.
[Fig. 14] Fig. 14 is a series of graphs showing a design profile of the overall interlayer film for laminated glass.
[Fig. 15] Fig. 15 is a series of graphs showing a design profile of the overall interlayer film for laminated glass.
[Fig. 16] Fig. 16 is a series of graphs showing a design profile of the overall interlayer film for laminated glass.
[Fig. 17] Fig. 17 is a series of graphs showing a design profile of the overall interlayer film for laminated glass.

### Description of Embodiments

Hereinafter, the present invention will be described in more detail with reference to embodiments. The following description is based on the premise that the interlayer film for laminated glass is used for the windshield of a car, but the interlayer film for laminated glass may also be used for applications other than for the windshield of a car, as described later.

### <First embodiment>

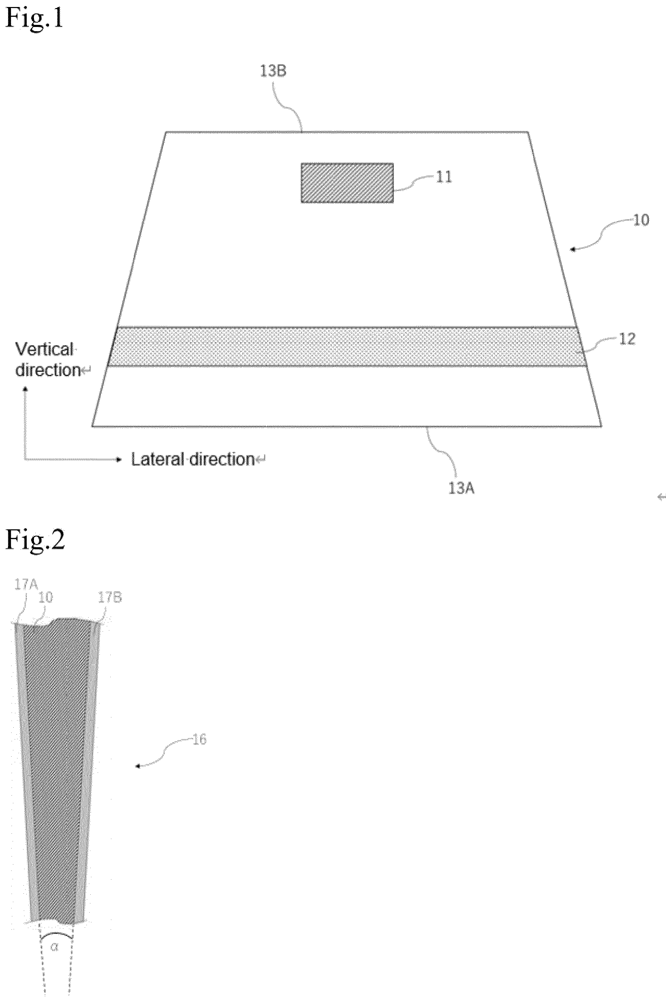

Fig. 1 schematically shows an interlayer film for laminated glass according to a first embodiment. In this embodiment, an example in which an interlayer film 10 for laminated glass (hereinafter, also simply referred to as "interlayer film") is used for the windshield of an automobile is shown. In the interlayer film 10 according to this embodiment, one edge 13A is arranged at a lower edge of the windshield, and the other edge 13B is arranged at an upper edge of the windshield. In general, the interlayer film 10 may have a length from the one edge 13A to the other edge 13B (hereinafter, sometimes referred to as "product width") of, for example, 700 mm or more, but the length may be 740 mm or more, 800 mm or more, 900 mm or more, or 1000 mm or more. Further, the length is, for example, 2500 mm or less, but may be 2000 mm or less, 1500 mm or less, or 1200 mm or less. The above-described interlayer film having a large product width is preferably used for a windshield that is generally provided from the front surface across the roof surface of an automobile. The product width is usually the length from the one edge 13A to the other edge 13B in the TD direction of the interlayer film.

As shown in Fig. 1, the interlayer film 10 according to the first embodiment has an onboard sensor region 11. The onboard sensor region 11 is a region through which light rays, electromagnetic waves such as millimeter waves, and ultrasonic waves are incident an onboard sensor from outside an automobile when the interlayer film 10 is used for the windshield of an automobile equipped with an onboard sensor. Examples of the onboard sensor include, but are not limited to, an onboard camera, an optical radar such as 3D-LiDAR, a millimeter wave radar, an ultrasonic sensor, and the like. Further, the position where the onboard sensor is installed is not particularly limited as long as it is inside the automobile, and the onboard sensor may be provided near the windshield or may be provided at a position away from the windshield.

The onboard sensor region 11 is generally arranged on an upper area of the windshield at a position facing the front of the automobile. The onboard sensor region 11 may be a region of about 100 to 200 mm at least one region in a range of a distance of 600 to 1000 mm, and preferably 700 to 1000 mm, from the one edge 13A toward the other edge 13B, for example, but the onboard sensor region 11 is not particularly limited to this. For example, the onboard sensor region 11 may be less than 100 mm (for example, 30 mm or more).

In this specification, the direction from the one edge 13A to the other edge 13B is referred to as the vertical direction, and the direction perpendicular to the vertical direction and the thickness direction of the interlayer film is referred to as the lateral direction. Generally, the vertical direction is a direction that coincides with TD, and the lateral direction is a direction that coincides with MD, but are not particularly limited thereto. For example, the vertical direction may be the direction from the one edge toward the other edge in the TD of the film. It is noted that MD stands for "machine direction", which is the direction that corresponds to the flow direction of the resin, and TD stands for "transverse direction".

As shown in Fig. 2, the interlayer film 10 is preferably a wedge interlayer film with a wedge-shaped cross section in which the thickness changes from the one edge 13A to the other edge 13B. A wedge angle α of a wedge interlayer film is expressed as a positive value when the thickness increases from the one edge 13A to the other edge 13B, and is expressed as a negative value when the thickness decreases from the one edge 13A to the other edge 13B. Although a wedge interlayer film generally has a wedge angle expressed as a positive value, and the partial wedge angle described below also usually has a positive value, all or a part of the wedge interlayer film may have a negative partial wedge angle. Further, the wedge interlayer film may partially have a wedge angle (partial wedge angle) of 0 mrad.

On the other hand, the interlayer film 10 preferably has a substantially uniform thickness along the lateral direction. Therefore, the wedge angle at the same position in the vertical direction remains substantially the same even if the position in the lateral direction changes.

It is noted that the interlayer film 10 is stretched and curved when used for bent glass, which will be described later, and the above vertical direction is also curved, but the above vertical direction and lateral direction of the curved interlayer film are curved to match that curvature.

As shown in Fig. 2, the interlayer film 10 is arranged between the first and second laminated glass members 17A and 17B in a laminated glass 16. The two laminated glass members 17A and 17B are adhered together with an interlayer film 10 interposed therebetween.

### (Wedge angle in onboard sensor region)

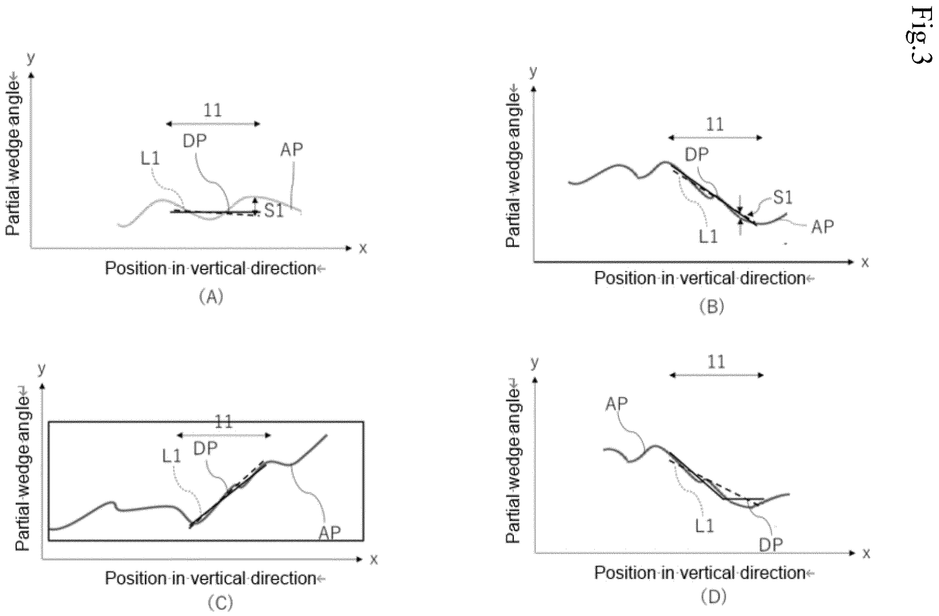

Fig. 3 shows a specific example of the design profile of the wedge angle α (see Fig. 2) in the onboard sensor region 11 according to this embodiment. In the onboard sensor region 11 of the interlayer film 10, the wedge angle α may, as shown in Fig. 3(A), be designed with a design profile DP that remains constant even if the position changes along the vertical direction, or may, as shown in Fig. 3(B) and 3(C), be designed with a design profile DP that changes at a constant rate of change along the vertical direction. In addition, as shown in Fig. 3(D), a combination of two types of design profiles may be used, namely, a design profile in which the wedge angle remains constant even if the position changes along the vertical direction and a design profile in which the wedge angle changes at a constant rate of change along the vertical direction.

However, in reality, the wedge angle α for each position in the vertical direction partially or wholly deviates from the design profile DP due to production errors during the production of the interlayer film, as shown by the actual measured profile AP. The wedge angle α for each position in the vertical direction is referred to as a "partial wedge angle". The partial wedge angle can be measured using the following method.

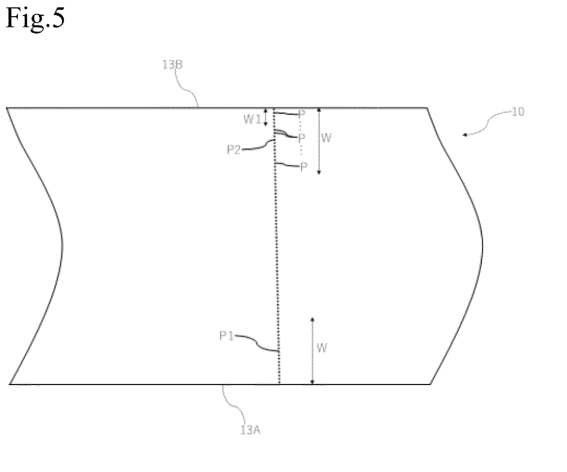

As shown in Fig. 5, the wedge angle at each position in the vertical direction is determined as follow. Measuring the thickness of the interlayer film 10 at 1 mm intervals along the vertical direction using a thickness measuring instrument to obtain thickness data, then calculating a simple moving average of a width W1 of 20 mm (= 21 points) with each point P as a center in the thickness data to remove noise in the thickness data. Here, it is not possible to select 21 points for the 10 thickness data points at either end portion, but noise is removed while ignoring the data points that cannot be selected. The thickness data after noise removal is taken as the vertical axis (y-axis), and the coordinates where the one edge 13A is 0 for the position along the vertical direction are taken as the horizontal axis (x-axis). At that time, in the region between the 41st point P (referred to as P1) in the direction from the one edge 13A to the other edge 13B, and the 41st point P (referred to as P2) in the direction from the other edge 13B to the one edge 13A, a first-order approximate straight line is calculated based on the least squares method for a width W of 80 mm (= 81 points) with each point as a center, and the angle formed between the first-order approximate straight line and the straight line at y = 0 is taken as the partial wedge angle. The partial wedge angle may be measured every 1 mm along the vertical direction so as to pass through the onboard sensor region 11 (when there is a HUD display region 12 described later, the onboard sensor region 11 and the HUD display region 12).

However, if the onboard sensor region 11 and the HUD display region 12 are not arranged at the same position in the vertical direction, the partial wedge angle may be measured by gradually shifting the measurement position in the lateral direction so that the partial wedge angle can be measured through both the onboard sensor region 11 and the HUD display region 12. As described above, the partial wedge angle remains substantially the same even if the position in the lateral direction changes, so even if the measurement position is shifted in the lateral direction, substantially the same measurement result is obtained.

Further, as described above, the partial wedge angle remains substantially the same even if the position in the lateral direction changes. Therefore, in the interlayer film after the laminated glass has been formed, for example, if the partial wedge angle in the onboard sensor region 11 cannot be measured because a shielding portion (described later) is provided adjacent to the onboard sensor region 11, the partial wedge angle at the position where the partial wedge angle cannot be measured may be measured by shifting the measurement position in the lateral direction.

Examples of the measuring instrument used to measure the thickness of the interlayer film include a contact thickness meter "TOF-4R" (manufactured by Yamabun Electronics Co., Ltd.) and the like. When using the TOF-4R, the thickness is measured in the TD direction at a conveyance speed of 1 to 3 m/min. Examples of the measuring instrument used to measure the thickness of the interlayer film after the interlayer film incorporated into laminated glass include a non-contact multilayer film measuring device "OPTIGAUGE" (manufactured by Lumetrics).

In Fig. 3, the design profile DP is a line obtained by plotting the design values of the wedge angle, and the actual measured profile AP is a line obtained by plotting the actually measured partial wedge angles. In Fig. 3, the design profile DP shows the profile only in the onboard sensor region 11, but for reference the actual measurement profile AP also shows the profile of the regions on the one edge 13A side and the other edge 13B side that are further from the onboard sensor region 11.

Here, the interlayer film 10 according to this embodiment is characterized in that the maximum amount of deviation S1 of the partial wedge angle with respect to the approximate straight line L1 of the partial wedge angle in the onboard sensor region 11 is 0.2 mrad or less.

As described above, the wedge angle in the onboard sensor region 11 is designed in accordance with the design profile DP. Therefore, when the partial wedge angle is measured from the one edge 13A side toward the other edge 13B side in the onboard sensor region 11 and the approximate straight line L1 of those partial wedge angles is determined, as shown in Fig. 3, the approximate straight line L1 is a first-order straight line that shows roughly the same trend as the design profile DP.

In this embodiment, as described above, by suppressing the maximum amount of deviation S1 of the partial wedge angle with respect to the approximate straight line L1 of the partial wedge angle, which shows roughly the same trend as the design profile DP in the onboard sensor region 11, to 0.2 mrad or less, transmitted double images from light rays detected by the onboard sensor are significantly reduced, thereby enhancing the detection accuracy of the onboard sensor. Although the principle by which the transmitted double images are significantly reduced when the maximum amount of deviation S2 of the partial wedge angle is set to a certain value or less is not clear, the inventor discovered this through experimental studies as shown in the examples described later. It is noted that the maximum amount of deviation S1 is an index indicating the amount of deviation from the approximate straight line L1, and is expressed as an absolute value.

The approximate straight line L1 is a linear function determined by the least squares method from the partial wedge angle measured in the onboard sensor region 11 and the position in the vertical direction where the partial wedge angle was measured. Taking the position in the vertical direction to be x and the partial wedge angle to be y, the approximate straight line L1 can be expressed as y = ax + b. It is noted that x is set to 0 at the position of the one edge 13A. (a and b are coefficients. a and b may be 0. a is the slope of the approximate straight line L1.)

As described above, the maximum amount of deviation S1 of the partial wedge angle with respect to the approximate straight line L1 in the onboard sensor region 11 may be 0.2 mrad or less, but from the viewpoint of increasing the detection accuracy by effectively reducing transmitted double images, the maximum amount of deviation S1 is preferably 0.18 mrad or less, more preferably 0.15 mrad or less, and further preferably 0.10 mrad or less. Further, the maximum amount of deviation S1 may be 0 mrad or more, but from the viewpoint of making it easier to produce the interlayer film by a normal production method, it is better for the maximum amount of deviation S1 to be a certain value or more, for example, 0.01 mrad or more, preferably 0.03 mrad or more, more preferably 0.04 mrad or more, and further preferably 0.05 mrad or more. The maximum amount of deviation S1 is, for example, 0.01 mrad or more and 0.2 mrad or less, preferably 0.01 mrad or more and 0.18 mrad or less, more preferably 0.03 mrad or more and 0.15 mrad or less, further preferably 0.04 mrad or more and 0.10 mrad or less, and still further preferably 0.05 mrad or more and 0.10 mrad or less.

The average value obtained by arithmetic averaging of the partial wedge angles calculated in the onboard sensor region 11 is not particularly limited, but from the viewpoint of increasing the detection accuracy by making it more difficult for transmitted double images to be detected by the onboard camera, it is better for the average value to be less than or equal to a certain value, for example, preferably 0.5 mrad or less, more preferably 0.4 mrad or less, and further preferably 0.3 mrad or less. Further, the average value of the partial wedge angle in the onboard sensor region 11 is preferably -0.3 mrad or more, more preferably -0.2 mrad or more, and further preferably -0.1 mrad or more.

In addition, the absolute value of the average value of the partial wedge angle in the onboard sensor region 11 of the interlayer film 10 may be 0 mrad or more, and therefore, there may be substantially no change in the thickness in the onboard sensor region 11.

Further, it is preferred to appropriately set the average value obtained by arithmetic averaging of the partial wedge angles calculated in the onboard sensor region 11 in accordance with expected distance of the object to be detected by the onboard sensor in order to increase the detection accuracy in the onboard sensor by reducing transmitted double images.

For example, if the expected distance of the object to be detected by the onboard sensor is relatively short (for example, 50 m or less, and preferably about 10 to 30 m), double transmitted images can be reduced more easily by making the wedge angle in the onboard sensor region 11 relatively large. Specifically, when the distance is relatively short, the average value of the partial wedge angle in the onboard sensor region 11 is preferably 0.1 mrad or more, but it may be 0.15 mrad or more, 0.2 mrad or more, or even 0.25 mrad or more. From the same viewpoint, the average value obtained by arithmetic averaging of the partial angle wedges calculated in the onboard sensor region 11 is preferably less than -0.05 mrad, more preferably less than -0.1 mrad, and further preferably less than -0.15 mrad.

On the other hand, if the expected distance of the object to be detected by the onboard sensor is relatively long (for example, more than 50 m, and preferably about 70 to 120 m), double transmitted images can be reduced more easily by making the absolute value of the wedge angle in the onboard sensor region 11 relatively small. Specifically, when the distance is relatively long, the average value of the partial wedge angle in the onboard sensor region 11 is, for example, preferably -0.12 mrad or more and less than 0.12 mrad, more preferably -0.10 mrad or more and less than 0.10 mrad, further preferably -0.05 mrad or more and less than 0.05 mrad, and still further preferably -0.03 mrad or more and less than 0.03 mrad.

When the expected distance of the object to be detected is relatively short, it is preferable to use, for example, an onboard camera as the onboard sensor, and use that onboard sensor in a pedestrian detection system or the like. Further, it is particularly preferred to use, for example, an onboard camera as an onboard sensor to detect targets at relatively short distances (for example, 50 m or less, and preferably about 10 to 30 m), such as detecting white lines, pedestrians, and light vehicles such as bicycles.

On the other hand, when the expected distance of the object to be detected is relatively long, it is preferable to use, for example, an onboard camera as the onboard sensor, and employ that onboard sensor in a drive recorder or the like. Further, it is particularly preferred to use, for example, an onboard camera as an onboard sensor to detect targets at relatively far distances (for example, more than 50 m, and preferably about 70 to 120 m), such as recognizing traffic signals.

The slope of the approximate straight line L1 in the onboard sensor region 11 is preferably 0.7 mrad/100 mm or less, more preferably 0.5 mrad/100 mm or less, further preferably 0.3 mrad/100 mm or less, further preferably 0.1 mrad/100 mm, still further preferably 0.05 mrad/100 mm, especially preferably 0.01 mrad/100 mm or less, and particularly preferably 0.005 mrad/100 mm or less. By setting the slope of the approximate straight line L1 in the onboard sensor region 11 to be less than or equal to the above upper limit value, transmitted double images can be reduced and the detection accuracy of the onboard sensor can be increased more easily. There is also an advantage in that degassing properties during bonding are enhanced.

From such a viewpoint, the slope of the approximate straight line L1 in the onboard sensor region 11 may be, for example, -0.3 mrad/100 mm or more and 0.3 mrad/100 mm or less, but is preferably -0.22 mrad/100 mm or more and 0.22 mrad/100 mm or less, and more preferably -0.10 mrad/100 mm or more and 0.10 mrad/100 mm or less.

It is preferred that the slope of the approximate straight line L1 in the onboard sensor region 11 is substantially approximate to 0 mrad/100 mm. If the slope of the approximate straight line L1 is substantially approximate to 0 mrad/100 mm, the wedge angle in the onboard sensor region 11 will be approximately constant, and so transmitted double images tend to be reduced and the detection accuracy of the onboard sensor tends to be enhanced. Specifically, the slope of the approximate straight line L1 in the onboard sensor region 11 is preferably -0.007 mrad/100mm or more and 0.007 mrad/100 mm or less, and more preferably -0.005 mrad/100mm or more and 0.005 mrad/100 mm or less.

The unit of the slope is shown as mrad/100 mm, but this merely shown as a value per 100 mm for convenience, and the onboard sensor region is not limited to having a length of 100 mm or more. The length of the onboard sensor region may be less than 100 mm (for example, 30 mm).

### (Region other than onboard sensor region)

The interlayer film 10 according to this embodiment may have a part where the partial wedge angle changes in a region other than the onboard sensor region 11. When a region other than the onboard sensor region 11 has a part where the partial wedge angle changes, the partial wedge angle can be set in the region other than the onboard sensor region 11 in accordance with the position in the vertical direction. As a result, in the region other than the onboard sensor region 11, it is possible to suppress the occurrence of transmitted double images and enhance the visibility of the interlayer film. Further, as described later, when a HUD display region is provided, it is possible to suppress the occurrence of reflected double images in the HUD display region, thereby enhancing the display accuracy of the HUD.

Having a part where the partial wedge angle changes means that when an approximate straight line LA is determined at each point of a predetermined region, the absolute value of the slope of at least one of those approximate straight lines LA is 0.008 mrad/100 mm or more. The predetermined region preferably has a part where the absolute value of the slope of an approximate straight line LA is 0.01 mrad/100 mm or more. As used herein, "predetermined region" refers to a region other than the onboard sensor region 11, specifically, a region on the one edge 13A side of the onboard sensor region 11, or a region on the other edge 13A side. Further, the method for calculating the approximate straight line LA will be described in detail later.

However, the interlayer film 10 according to this embodiment is not required to have a part where the partial wedge angle changes in a region other than the onboard sensor region 11. When the interlayer film 10 does not have a part where the partial wedge angle changes in a region other than the onboard sensor region 11, the wedge angle in the onboard sensor region 11 and the partial wedge angle in the region other than the onboard sensor region 11 will be approximately the same. Therefore, depending on the average value of the partial wedge angle in the onboard sensor region 11, visibility in the region other than the onboard sensor region 11 can be enhanced, and the display accuracy of the HUD in the HUD display region can be enhanced. In this case, the average value of the partial wedge angle in the onboard sensor region 11 may be, for example, about 0.005 mrad or more and 0.3 mrad or less.

As used herein, "does not have a part where the partial wedge angle changes" means that when an approximate straight line LA is determined at each point of a predetermined region (here, a region other than the onboard sensor region 11), the maximum value of the absolute values of the slope of that approximate straight line LA is less than 0.008 mrad/100 mm. However, the maximum absolute value may be less than 0.005 mrad/100 mm.

Moreover, the above definitions of "has a part where the partial wedge angle changes" and "does not have a part where the partial wedge angle changes" also apply to the cases discussed in relation to other regions (such as a region other than the HUD display region) later.

### (HUD display region)

As shown in Fig. 1, the interlayer film 10 for laminated glass according to this embodiment preferably has a HUD display region 12 in which a HUD image is displayed. The HUD display region 12 may generally be placed on a lower area of the windshield when the interlayer film 10 for laminated glass is used for a windshield. Although the HUD display region 12 is shown in Fig. 1 as a long band-shaped region in the lateral direction, the HUD display region 12 is not particularly limited, and may be divided into a plurality of parts (not shown) so as to be lined up in the lateral direction.

In addition, in the HUD display region 12, a region of from 200 to 500 mm at least one region in a range of a distance of 100 to 600 mm from the one edge 13A toward the other edge 13B is generally the HUD display region.

If the interlayer film 10 has the HUD display region 12, a HUD display device (not shown) is provided inside the automobile. Light rays from a light source of the HUD display device are irradiated onto the laminated glass at a position corresponding to the HUD display region 12, the light rays reflected by the laminated glass are incident on the eyes of the driver and the like, and are is recognized as an HUD image. The type of HUD display device is not particularly limited. The displayed image may have a single focal length, or the displayed image may have two or more focal lengths. The HUD display device may also be a dual HUD that displays different images at different positions in the vertical direction.

In the interlayer film 10, the HUD display region 12 may have a wedge angle so that the thickness of the interlayer film 10 changes depending on the position in the vertical direction, and it is preferable to have a positive wedge angle (partial wedge angle) so that reflected double images are reduced.

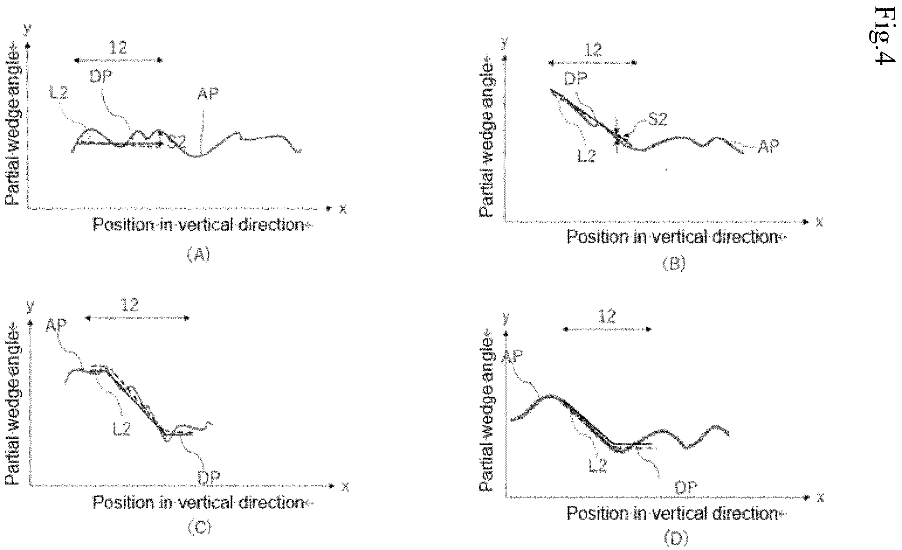

Representative design profiles of the partial angle wedge in the HUD display region 12 are shown in Fig. 4. As shown in Fig. 4(A), the design profile DP in the HUD display region 12 may be designed with a design profile in which the partial wedge angle remains constant even if the position changes along the vertical direction.

Further, as shown in Fig. 4(B) to 4(D), the design profile DP may have a portion in which the partial wedge angle changes at a constant rate of change along the vertical direction. In this way, if the HUD display region 12 has a region in which the partial wedge angle substantially changes, it is possible to select the wedge angle optimal for suppressing reflected double images at each position even if, for example, the eye height position of the driver changes. Further, reflected double images can be effectively suppressed in a HUD that displays two or more images having different focal lengths, such as a dual HUD. In particular, as shown in Fig. 4(C) and 4(D), for a dual HUD it is more preferred to have a portion where the partial wedge angle remains constant even if the position in the vertical direction changes.

In the HUD display region 12, when the approximate straight line L2 of the partial wedge angle of each point along the vertical direction is determined, it is preferred that the maximum absolute value S2 of the difference of the partial wedge angle with respect to the approximate straight line L2 at each point is 0.2 mrad or less. When the maximum absolute value S2 of the difference of the partial wedge angle with respect to the approximate straight line L2 of the partial wedge angle is thus set to 0.2 mrad or less, the partial wedge angle at each position of the HUD display region 12 roughly matches the desired angle (namely, the design profile). Therefore, it is possible to prevent reflected double images from occurring in the HUD image, and increase the display accuracy of the HUD image. That is, it is possible to increase not only the detection accuracy of the onboard sensor but also the display accuracy of the HUD image.

The maximum value S2 of the absolute value of the difference in the partial wedge angle with respect to the approximate straight line L2 described above is, from the viewpoint of further increasing the display accuracy of the HUD image, more preferably 0.18 mrad or less, further preferably 0.15 mrad or less, and still further preferably 0.1 mrad or less. Further, the maximum value S2 may be 0 mrad or more, but from the viewpoint of making it easier to produce the interlayer film by a normal production method, it is better for the maximum amount of deviation S1 to be a certain value or more, for example, 0.01 mrad or more, preferably 0.03 mrad or more, more preferably 0.04 mrad or more, and further preferably 0.05 mrad or more. The maximum value S2 is, for example, 0.01 mrad or more and 0.2 mrad or less, preferably 0.01 mrad or more and 0.18 mrad or less, more preferably 0.03 mrad or more and 0.15 mrad or less, further preferably 0.04 mrad or more and 0.10 mrad or less, and still further preferably 0.05 mrad or more and 0.10 mrad or less.

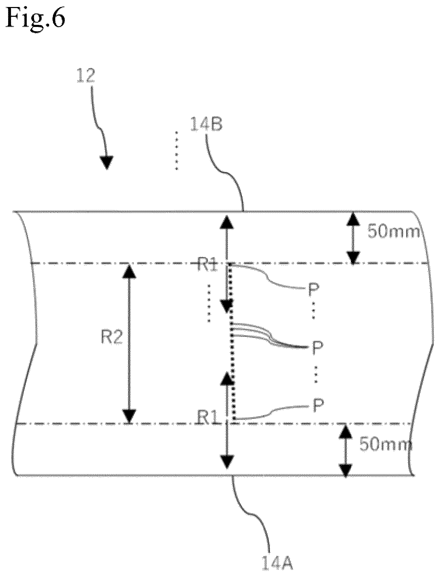

The method for calculating the approximate straight line L2 at each point will now be described in detail with reference to Fig. 6. As shown in Fig. 6, the approximate straight line L2 at each point is determined by selecting a region R1 within a range of 50 mm toward one edge direction and the other edge direction from each point P as a center in the HUD display region 12, calculating an approximate straight line of the partial wedge angle in the region R1, and taking the calculated approximate straight line as the approximate straight line L2 at each point P.

Here, each point P is the same as the measurement point where the partial wedge angle is measured, and as shown in Fig. 6, may be measured in a region R2 that excludes the region within 50 mm in the vertical direction from the one edge 14A of the HUD display region 12 and the region within 50 mm in the vertical direction from the edge 14B of the region 12. Further, at each point P, the absolute value of the difference between the value of each calculated approximate straight line L2 (that is, the value of y) and each measured partial wedge angle is calculated, and the maximum value of the calculated absolute values at each point P of the region R2 is adopted as the maximum value S2.

In the HUD display region 12, the reason why a large number of approximate straight lines L2 are calculated is because, as shown in Fig. 4(C) and (D), there are inflection points where the wedge angle profile changes significantly, and so unless a large number of approximate straight lines L2 are calculated, it may not be possible to calculate the amount of deviation from the design profile DP.

However, if the length of the vertical direction of the HUD display region 12 is 100 mm or less, similar to the approximate straight line L1, it is only necessary to calculate one approximate straight line of the partial wedge angle of the overall HUD display region 12.

Further, each approximate straight line L2 is a linear function determined by the least squares method from the partial wedge angle measured at the region R2 of the HUD display region 12 and the position in the vertical direction where the partial wedge angle was measured. Taking the position in the vertical direction to be x and the partial wedge angle to be y, the approximate straight line L1 can be expressed as y = ax + b. It is noted that x is set to 0 at the position of the one edge 13A. (a and b are coefficients. a and b may be 0. a is the slope of the approximate straight line L2.)

An approximate straight line L3, which is described later, can be determined in the same manner as the approximate straight line L2, and for the approximate straight line L3 as well, the approximate straight line at each point in a region excluding the region 50 mm from either end of a region 20 on the one edge side may be determined. Further, the above-described approximate straight line LA may also be determined by the same method. In the measurement of the approximate straight line LA, if there are two predetermined regions to be measured, the approximate straight line may be determined at each point in each region using the same method as described above.

As shown in Fig. 4(A), (C), and (D), the HUD display region 12 is configured such that at a part having a design profile in which the partial wedge angle remains constant even if the position changes along the vertical direction, in order to match the design profile, the slope of the calculated approximate straight line L2 according to the profile becomes a value substantially close to 0 mrad/100 mm. Therefore, in one embodiment, the HUD display region 12 preferably has a part where the absolute value of the slope of an approximate straight line L2 is less than 0.005 mrad/100 mm, more preferably a part where the absolute value is less than 0.004 mrad/100 mm, and further preferably a part where the absolute value is less than 0.003 mrad/100 mm.

In addition, when there is a part where the absolute value of the slope of an approximate straight line L2 is less than 0.005 mrad/100 mm, all of the approximate straight lines L2 calculated in the HUD display region 12 may be less than 0.005 mrad/100 mm, but it also acceptable if some of those approximate straight line L2 are less than 0.005 mrad/100 mm.

Further, as shown in Fig. 4 (B), (C), and (D), the HUD display region 12 is configured such that at a part having a design profile in which the partial wedge angle changes at a constant rate of change along the vertical direction, in order to match the design profile, the slope of the calculated approximate straight line L2 according to the profile becomes a value that deviates from 0 mrad/100 mm. Therefore, in one embodiment, the HUD display region 12 may have a part where the absolute value of the slope of an approximate straight line L2 is 0.005 mrad/100 mm or more.

In addition, from the viewpoint of suppressing reflected double images, in the HUD display region 12, it is preferred that the value of the slope of the approximate straight line L2 is negative so that the wedge angle decreases from the one edge 13A to the other edge 13B.

Therefore, in one embodiment, the HUD display region 12 preferably has a part where the slope of the approximate straight line L2 is -0.005 mrad/100 mm or less, more preferably a part where the slope is -0.007 mrad/100 mm or less, further preferably a part where the slope is -0.01 mrad/100 mm or less, and still further preferably a part where the slope is -0.15 mrad/100 mm or less. In the HUD display region 12, the part where the slope of the approximate straight line L2 is less than or equal to the above upper limit value (for example, -0.005 mrad/100 mm) is not particularly limited, but may be, for example, a part where the slope is -0.4 mrad/100 mm or more, and preferably a part where the slope is -0.25 mrad/100 mm or more.

In addition, when there is a part where the slope of approximate straight line L2 is less than or equal to the above predetermined value (for example, -0.005 mrad/100mm), the slope of all the approximate straight lines L2 calculated in the HUD display region 12 may be less than or equal to the above predetermined value (for example, -0.005 mrad/100 mm), but it is also acceptable if the slope of some of the approximate straight lines L2 is less than or equal to the above predetermined value. That is, the HUD display region 12 may have, for example, both a part where the absolute value of the slope of an approximate straight line L2 is less than 0.005 mrad/100mm and a part where the slope of an approximate straight line L2 is less than or equal to the above predetermined value (for example, -0.005 mrad/100 mm).

The average value of the partial wedge angle in the HUD display region 12 is not particularly limited, but from the viewpoint of reducing reflected double images and enhancing the display accuracy, it is better that the average value be a certain value or more. For example, the average value may be 0.07 mrad or more, preferably 0.1 mrad or more, more preferably 0.2 mrad or more, and further preferably 0.3 mrad or more. Further, as the wedge angle increases, transmitted light from outside the automobile tends to become a double image. Therefore, from the viewpoint of suppressing the formation of transmitted double images due to light transmitted through the HUD display region 12, it is better to set the average value of the partial wedge angle in the HUD display region 12 to a certain value or less, for example, it may be 1.0 mrad or less, preferably 0.7 mrad or less, more preferably 0.55 mrad or less, and further preferably 0.5 mrad or less. In addition, the average value of the partial wedge angle in the HUD display region 12 is, for example, 0.07 mrad or more and 1.0 mrad or less, preferably 0.1 mrad or more and 0.7 mrad or less, more preferably 0.2 mrad or more and 0.55 mrad or less, and further preferably 0.3 mrad or more and 0.5 mrad or less.

Further, from the viewpoint of suppressing reflected double images in the HUD display region 12 to enhance display accuracy and suppressing transmitted double images in the onboard sensor region 11 to enhance the detection accuracy, and the viewpoint of reducing winding misalignment and maintaining a roll shape when the interlayer film is wound into a roll shape, the absolute value of the difference between the average value of the partial wedge angle in the onboard sensor region 11 and the average value of the partial wedge angle in the HUD display region 12 is preferably 0.01 mrad or more, more preferably 0.05 mrad or more, further preferably 0.1 mrad or more, and still further preferably 0.15 mrad or more. In addition, from the viewpoint of suppressing the formation of transmitted double images due to light transmitted through the HUD display region 12, and the viewpoint of suppressing of adherence defects when bonding with a glass sheet, the absolute value of the difference between the average values of the partial wedge angles may be, for example, 0.9 mrad or less, preferably 0.7 mrad or less, more preferably 0.5 mrad or less, and further preferably 0.4 mrad or less. Moreover, the absolute value of the difference between the average value of the partial wedge angle in the onboard sensor region 11 and the average value of the partial wedge angle in the HUD display region 12 is preferably 0.01 mrad or more and 0.9 mrad or less, more preferably 0.05 mrad or more and 0.7 mrad or less, further preferably 0.1 mrad or more and 0.5 mrad or less, and still further preferably 0.15 mrad or more and 0.4 mrad or less.

The average value of the partial wedge angle in the HUD display region 12 is preferably larger than the average value of the partial wedge angle in the onboard sensor region 11. By having a large wedge angle in HUD display region 12 and a relatively small wedge angle in the onboard sensor region 11, it is much easier to further enhance the detection accuracy by suppressing transmitted double images in the onboard sensor region 11 while enhancing the display accuracy by suppressing reflected double images in the HUD display region 12.

Although it is preferable for the interlayer film 10 to have the HUD display region 12 as described above, the interlayer film 10 is not required to have the HUD display region 12. That is, an HUD image does not need to be displayed on the laminated glass including the interlayer film 10.

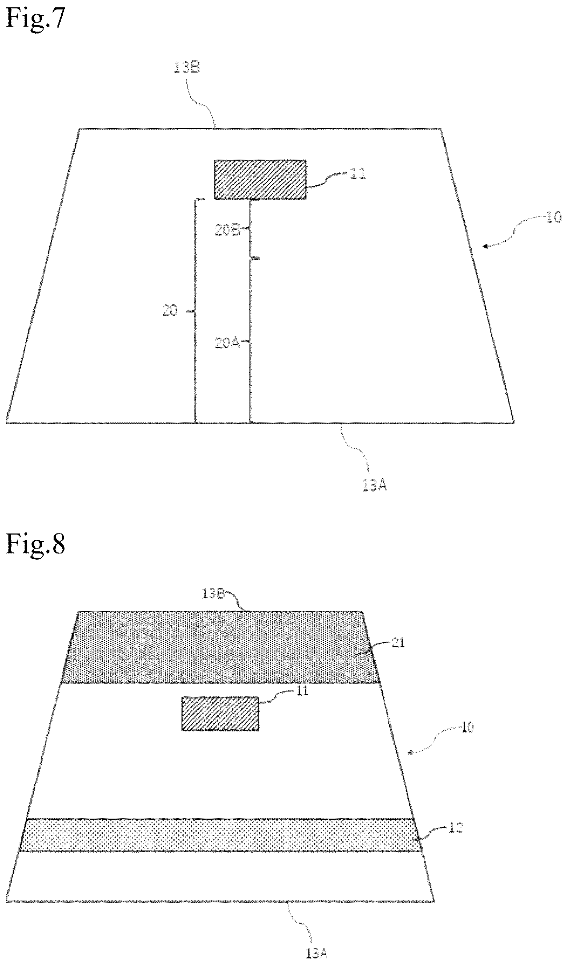

If the HUD display region 12 is not included, as shown in Fig. 7, the average value of the partial wedge angle in a region 20 from the one edge 13A to the onboard sensor region 11 toward the other edge 13B (hereinafter, this region is referred to as "region on the one edge side") and the average value of the partial wedge angle in the onboard sensor region 11 may be the same. However, it is preferred that these average values are different, and specifically, the difference is preferably 0.001 mrad or more.

Even if the HUD display region 12 is not provided, by making the wedge angles of the region 20 on the one edge side and the onboard sensor region 11 different, it is possible to set a wedge angle according to each region, and visibility in the region 20 on the one edge side tends to enhance while increasing the detection accuracy in the onboard sensor region 11.

As described above, the absolute value of the difference between the average value of the partial wedge angle in the region 20 on the one edge side and the average value of the partial wedge angle in the onboard sensor region 11 is preferably 0.001 mrad or more, but more preferably is 0.005 mrad or more, and more preferably 0.1 mrad or more, and preferably is 0.5 mrad or less, more preferably 0.4 mrad or less, and further preferably 0.3 mrad or less.

The average value of the partial wedge angle in the region 20 on the one edge side is not particularly limited, but is, for example, 0.55 mrad or less, preferably 0.4 mrad or less, more preferably 0.2 mrad or less, further preferably 0.1 mrad or less, and still further preferably is 0.05 mrad or less, and is, for example, -0.3 mrad or more, preferably -0.25 mrad or more, more preferably -0.2 mrad or more, further preferably -0.1 mrad or more, and still further preferably -0.05 mrad or more.

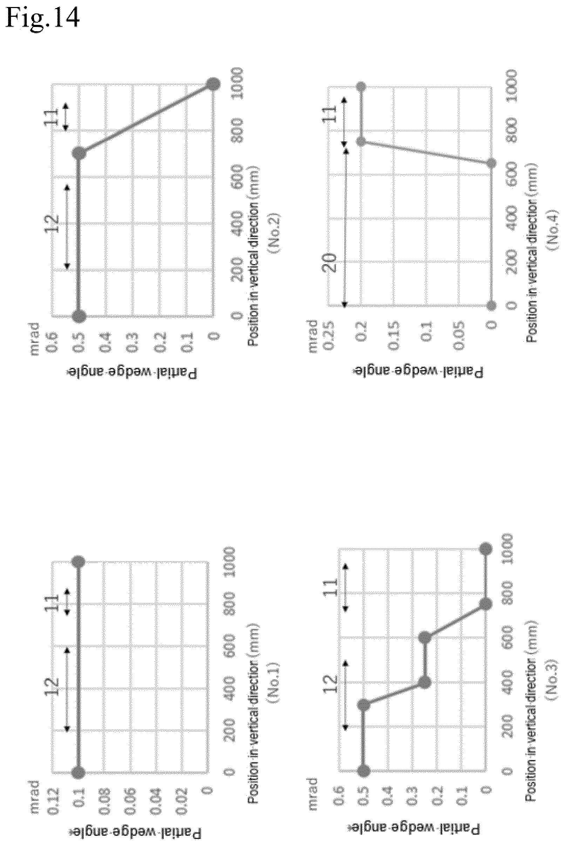

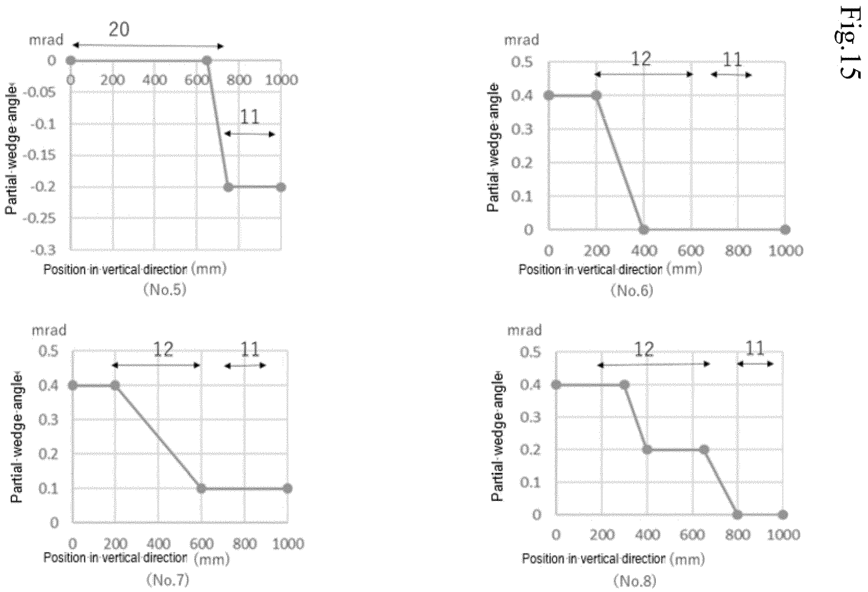

The region 20 on the one edge side preferably has region 20A in which the partial wedge angle substantially approximates 0 mrad and the slope of the approximate straight line L3 at each point substantially approximates 0 mrad/100 mm. The region 20A is preferably connected to the onboard sensor region 11 via a region 20B in which the absolute value of the slope of the approximate straight line L3 is sufficiently larger than 0 mrad/100 mm. The design profile of the wedge angle of such an interlayer film 10 is, for example, shown as Profile Nos. 4 and 5 (see Figs. 14 and 15), which will be described later.

The partial wedge angle at each point in the region 20A is, for example, -0.1 mrad or more and 0.1 mrad or less, and preferably -0.05 mrad or more and 0.05 mrad or less. The slope of the approximate straight line L3 at each point in the region 20A is, for example, -0.01 mrad/100 mm or more and 0.01 mrad/100 mm or less, and preferably -0.007 mrad or more and 0.007 mrad or less.

On the other hand, the absolute value of the slope of the approximate straight line L3 at each point of the region 20B may be 0.01 mrad/100 mm or more and 0.4 mrad/100 mm or less.

### (Region other than HUD display region)

The interlayer film 10 according to this embodiment may have a part where the partial wedge angle changes in a region other than the HUD display region 12. If a region other than the HUD display region 12 has a part where the partial wedge angle changes, the partial wedge angle can also be set in the region other than the HUD display region 12 in accordance with the position in the vertical direction. Therefore, as described above, it is possible to enhance the detection accuracy in the onboard sensor region 11, and to enhance the visibility of the interlayer film 10 by suppressing the occurrence of transmitted double images in the region other than the onboard sensor region 11 and the HUD display region 12.

However, the interlayer film 10 according to this embodiment is not required to have a part where the partial wedge angle changes in a region other than the HUD display region 12. Even if the interlayer film 10 does not have a part where the partial wedge angle changes in a region other than HUD display region 12, depending on the average wedge angle in the HUD display region 12, by setting the wedge angle to be approximately the same as that average wedge angle, even in regions other than the HUD display region 12, the occurrence of transmitted double images and the like can be suppressed to a certain extent, thereby enhancing the visibility of the interlayer film. Further, detection accuracy in the onboard sensor region 11 can also be enhanced.

### (Region other than onboard sensor region and HUD display region)

The interlayer film 10 according to this embodiment may have a part where the partial wedge angle changes in a region other than the HUD display region 12 and the onboard sensor region 11. If a region other than the HUD display region 12 and the onboard sensor region 11 has a part where the partial wedge angle changes, for example, it is possible to easily increase the difference between the average wedge angle of the HUD display region 12 and the average wedge angle in the onboard sensor region 11. Therefore, it is preferable to provide a part where the partial wedge angle changes in a region between the HUD display region 12 and the onboard sensor region 11.

However, the interlayer film 10 according to this embodiment is not required to have a part where the partial wedge angle changes in a region other than the HUD display region 12 and the onboard sensor region 11.

If a region other than the HUD display region 12 and the onboard sensor region 11 does not have a part where the partial wedge angle changes, for example, it is easier to set the average value of the partial wedge angle in the HUD display region 12 and the average value of the partial wedge angle in the onboard sensor region 11 to be about the same. Therefore, a embodiment in which the region between the HUD display region 12 and the onboard sensor region 11 does not have a part where the partial wedge angle changes is also preferable.

### (Visible light transmittance)

The interlayer film 10 has a visible light transmittance of preferably 60% or more, more preferably 70% or more, further preferably 75% or more, and still further preferably 80% or more. By increasing the visible light transmittance, the interlayer film 10 has enhanced visibility, and can be suitably used for a windshield of various vehicles such as automobiles. The visible light transmittance is not particularly limited, and may be 100% or less, but in practical terms the visible light transmittance may be 99% or less.

It is preferred that the visible light transmittance of at least the onboard sensor region 11, or the onboard sensor region 11 and the HUD display region 12, of the interlayer film 10 is within the above range.

As described above, the visible light transmittance of all the regions of the interlayer film 10 may be within the above range, or some of the regions (for example, the onboard sensor region 11, or the region including the onboard sensor region 11 and the HUD display region 12) may have a light transmittance of 60% or more and the other regions have a visible light transmittance of less than 60%. More specifically, as described below, the interlayer film 10 may have a colored region having a visible light transmittance of less than 60%.

In the present invention, the visible light transmittance of the interlayer film is determined by measuring the visible light transmittance of laminated glass produced by adhering two standard clear glass sheets with the interlayer film interposed therebetween. The visible light transmittance can be measured in accordance with JIS R3212 (2015). In addition, the standard clear glass sheets used when measuring the visible light transmittance are flat glass sheets having a thickness of 2.5 mm and a visible light transmittance of 90.5% measured in accordance with JIS R 3106:1998, and specifically, are the clear glass sheets used in the Examples.

### (Colored region)

An example of an interlayer film 10 having a colored region is shown in Fig. 8. It is preferred that a colored region 21 is provided closer to the other edge 13B side the onboard sensor region 11. For example, the colored region 21 may be provided in a region from a predetermined position closer to the other edge 13B side than the onboard sensor region 11 to the other edge 13B. However, the colored region 21 is not required to be provided at a position separated from the onboard sensor region 11, and may be provided at a position in contact with the onboard sensor region 11. As described later, the colored region 21 may be colored by incorporating a coloring agent into a corresponding portion of the interlayer film 10.

In the example of Fig. 8, the interlayer film 10 has both the onboard sensor region 11 and the HUD display region 12, but as described above, the HUD display region 12 may be omitted, and the interlayer film 10 may have the onboard sensor region 11 and the colored region 13 but not have a HUD display region. In this case, the details of the region (region 20 on the one edge side) from the one edge 13A to the onboard sensor region 11 are as described above.

As shown in Fig. 8, when the interlayer film 10 has a colored region 21 on the other edge 13B side of the onboard sensor region 11, the colored region 21 acts as a so-called "shade" positioned at an upper front surface of the automobile so that occupants such as the driver can be protected from direct sunlight. Further, although the windshield is sometimes provided from the front surface of the automobile to the roof surface, in such a case, the colored region 21 is preferably provided from the upper front surface of the automobile across the roof surface.

In the interlayer film 10, the colored region 21 preferably has an average partial wedge angle of 0.6 mrad or less. By lowering the average value of the partial wedge angle in the colored region 21, the transmittance profile of the colored region can be made uniform. The average value of the partial wedge angle in the colored region 21 is preferably 0.4 mrad or less, more preferably 0.2 mrad or less, and further preferably 0.15 mrad or less.

The lower limit of the average value of the partial wedge angle in the colored region 21 is not particularly limited, and may be, for example, -0.6 mrad or more, but is preferably - 0.2 mrad or more, more preferably -0.1 mrad or more, and further preferably -0.05 mrad or more. By not setting the wedge angle of the colored region 21 to a large negative value in this way, the transmittance profile of the colored region can be made uniform. In addition, by reducing the difference between the average value of the partial wedge angle in the colored region 21 and the wedge angles in the onboard sensor region 11 and the HUD display region 12 without setting to a large negative value, the interlayer film can be produced more easily.

Although the colored region 21 is a region in which the visible light transmittance is less than 60%, the visible light transmittance in the colored region 21 may be constant or may be different for each region. Further, in the colored region 21, the visible light transmittance in the region with the lowest visible light transmittance is, from the viewpoint of enhancing light shielding properties, design properties, and the like, preferably 40% or less, and more preferably 20% or less. In addition, in the colored region 21, the visible light transmittance in the region with the lowest visible light transmittance may be, for example, 0.1% or more, and preferably 1% or more. By setting the visible light transmittance in the colored region 21 to a certain value or more, a certain level of visibility can be ensured even in the colored region 21.

### (Shielding portion)

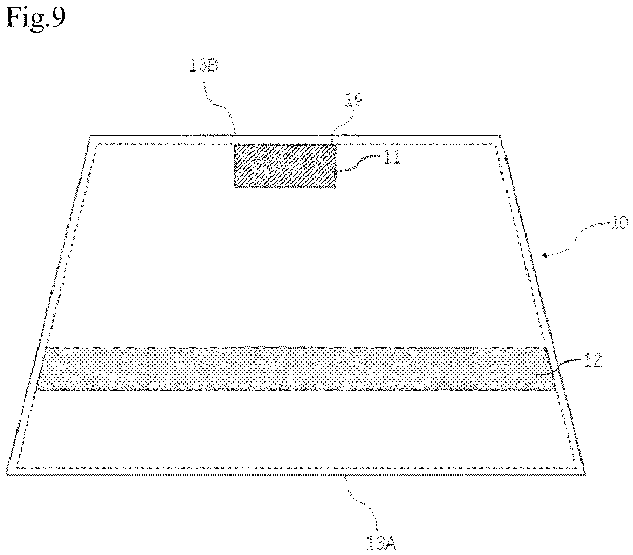

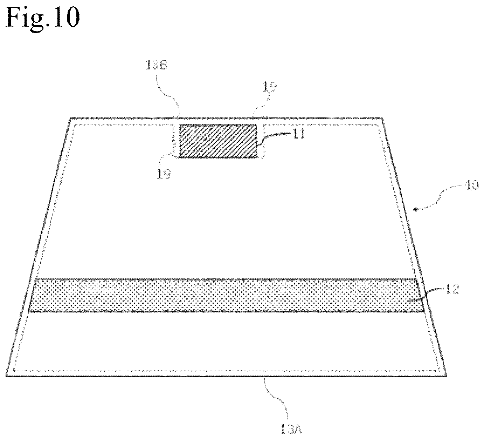

As shown in Figs. 9 and 10, a shielding portion 19, which is referred to as so-called "black cera", may be provided in the laminated glass at a peripheral edge of at least one of the laminated glass members 17A and 17B. The black cera is a black shielding portion, and is preferably formed of, for example, black ceramic. The black cera is generally provided to ensure light-shielding properties and to protect the peripheral edge of the laminated glass member. In this embodiment, it is preferred that the onboard sensor region 11 is arranged at a position adjacent to shielding portion 19 and in contact with shielding portion 19 when interlayer film 10 is viewed in the thickness direction. As shown in Fig. 9, the shielding portion 19 may be provided in a frame shape along the peripheral edge of at least one of the laminated glass members, and in contact with only the other edge 13B side of the onboard sensor region 11, but as shown in Fig. 10, the shielding portion 19 may also be provided so as to surround the shielding portion 19, and be in contact with both sides.

### (Wedge angle profile of overall interlayer film)

In this embodiment, the design profile of the wedge angle of an interlayer film having the HUD display region 12 and the onboard sensor region 11 is preferably a combination of any of the design profiles DP shown in Fig. 3(A) to 3(D) and a design profile DP shown in Fig. 4(A) to (D).

Specific examples of the design profile of the wedge angle of an interlayer film having the HUD display region 12 and the onboard sensor region 11 include Profile Nos. 1 to 3 and 6 to 15 shown in Figs. 14 to 17. However, each of the design profiles shown in Figs. 14 to 17 is specifically shown in order to illustrate the present invention, and the present invention is not limited to the design profiles shown in Figs. 14 to 17.

The design profile of the overall interlayer film 10 may be, for example, as illustrated by Profile Nos. 1, 10, 14, and 15, a design profile combining the design profile of Fig. 3(A) and the design profile of Fig. 4(A), in which the wedge angle is roughly constant in each of the onboard sensor region 11 and the HUD display region 12.

In this case, as illustrated by Profile No. 1 (see Fig. 14), the average values of the partial wedge angles in the onboard sensor region 11 and the HUD display region 12 may be roughly the same, and there may be no part where the partial wedge angle changes between the HUD display region 12 and the onboard sensor region 11.

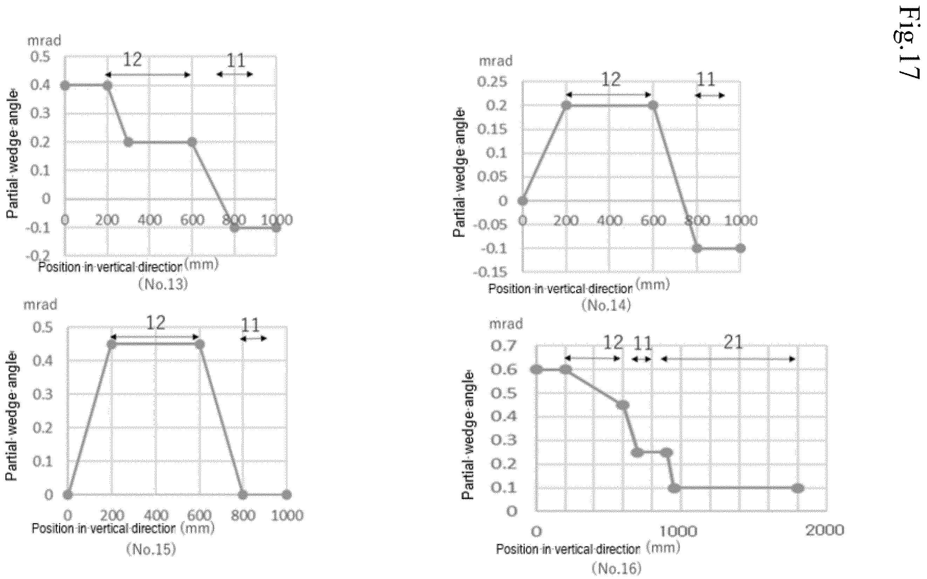

Further, as illustrated by Profile No. 10 (see Fig. 10) and Nos. 14 and 15 (see Fig. 17), the average values of the partial wedge angles in the onboard sensor region 11 and the HUD display region 12 may be substantially different from each other, and there may be part where the partial wedge angle changes between the HUD display region 12 and the onboard sensor region 11.

In addition, the design profile of the interlayer film 10 may be a combination of the design profile shown in Fig. 3(B) and the design profile shown in Fig. 4(A), in which, as illustrated by Profile Nos. 2 and 9, the partial wedge angle is roughly constant in the HUD display region 12 and substantially changes in the onboard sensor region 11.

Similarly, the design profile of the overall interlayer film 10 may be a combination of the design profile shown in Fig. 3(D) and the design profile shown in Fig. 4(A), in which the partial wedge angle is roughly constant in the HUD display region 12 and substantially changes in the onboard sensor region 11.

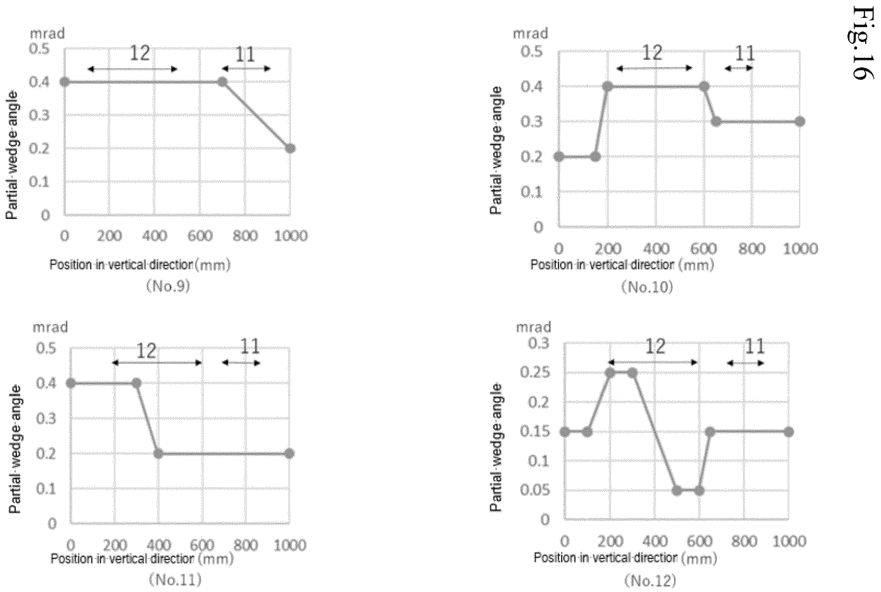

Even with the above design profiles, as illustrated by Profile No. 2 (see Fig. 14) and No. 13 (see Fig. 17), there may be a part where the partial wedge angle changes between the HUD display region 12 and the onboard sensor region 11, or as illustrated by Profile No. 9 (see Fig. 16), there may not be such a part.

Further, the design profile of the overall interlayer film 10 may be a combination of the design profile shown in Fig. 3(A) and the design profile shown in Fig. 4(C), in which, as illustrated by Profile Nos. 8, 11, and 12, the partial wedge angle substantially changes in the HUD display region 12 and is roughly constant in the onboard sensor region 11.

Similarly, the design profile shown in Fig. 3(A) and the design profile shown in Fig. 4(D) may be combined so that, as illustrated by Profile No. 6, the partial wedge angle substantially changes in the HUD display region 12 and is substantially the same in the onboard sensor region 11.

In addition, the design profile shown in Fig. 3(A) and the design profile shown in Fig. 4(B) may be combined so that, as illustrated by Profile No. 7, the partial wedge angle substantially changes in the HUD display region 12 and is substantially the same in the onboard sensor region 11.

In these cases, as illustrated by Profile No. 3 (see Fig. 14), No. 8 (see Fig. 15), and No. 12 (see Fig. 16), there may be a part where the partial wedge angle changes between the HUD display region 12 and the onboard sensor region 11. Moreover, as illustrated by Profile Nos. 6 and 7 (see Fig. 15) and No. 11 (see Fig. 16), there may not be a part where the partial wedge angle changes between the HUD display region 12 and the onboard sensor region 11.

In addition, as illustrated by Profile No. 3 (see Fig. 14) and No. 13 (see Fig. 14), for example, the design profile shown in Fig. 3(D) and the design profile shown in Fig. 4(C) or 4(D) may be combined so that the partial wedge angle substantially changes in both the HUD display region 12 and the onboard sensor region 11.

In these cases as well, as illustrated by Profile Nos. 3 and 13, there may be a part where the partial wedge angle changes between the HUD display region 12 and the onboard sensor region 11, or there may not be a part where the partial wedge angle changes between the HUD display region 12 and the onboard sensor region 11.

Further, the interlayer film 10 may have, as illustrated by Profile No. 16, the colored region 21 in addition to the HUD display region 12 and the onboard sensor region 11. In this case, in Profile No. 16, the onboard sensor region 11 has the design profile shown in Fig. 3(A), and the HUD display region 12 has the design profile shown in Fig. 4(B), but the interlayer film 10 is not limited to this, and may have any profile.

In addition, as illustrated by Profile Nos. 4 and 5 (see Figs. 14 and 15), the HUD display region 12 may not be provided, and in this case, as described with reference to Fig. 7, it is preferable to have the region 20 on the one edge side.

Further, as illustrated by Profile No. 1, the region other than the onboard sensor region 11 may not have a part where the partial wedge angle changes, but as illustrated by Profile Nos. 2 to 16, that region may have a part where the partial wedge angle changes.

Similarly, as illustrated by Profile Nos. 1, 6, 7, and 11, the region other than the onboard sensor region 11, or the region other than the onboard sensor region 11 and the HUD display region 12, may not have a part where the partial wedge angle changes, but as illustrated by Profile Nos. 8 to 10 and 12 to 16, such regions may have a part where the partial wedge angle changes.

### (Wedge angle of overall interlayer film)

In one embodiment of the present invention, the thickness of the one edge 13A may be smaller than the thickness of the other edge 13B, or the thickness of the one edge 13A may be larger than the thickness of the other edge 13B. In the present invention, the average wedge angle of the interlayer film 10 is not particularly limited, but from the viewpoint of increasing the detection accuracy in the onboard sensor region 11 and increasing the display accuracy in the HUD display region 12, the average wedge angle may be set to a certain value or less, for example, set to be 0.9 mrad or less, preferably 0.7 mrad or less, more preferably 0.5 mrad or less, and further preferably 0.4 mrad or less.

Further, the average wedge angle of the interlayer film 10 may be, for example, -0.3 mrad or more. However, from the viewpoint of increasing the detection accuracy in the onboard sensor region 11 and increasing the display accuracy in the HUD display region 12, it is preferable not to set the average wedge angle to a large negative value. Specifically, -0.1 mrad or more is preferable, 0 mrad or more is more preferable, 0.05 mrad or more is further preferable, and 0.1 mrad or more is still further preferable.

The average wedge angle of the interlayer film 10 is the average value of the partial wedge angles in the overall interlayer film 10 measured from the one edge 13A to the other edge 13B.

In the interlayer film 10, it is preferred that the approximate straight line L4 of the partial wedge angle of the overall interlayer film from the one edge 13A to the other edge 13B has a positive or negative slope. If the slope of the approximate straight line L4 of the partial wedge angle of the overall interlayer film is positive or negative, it means that the interlayer film 10 has a wedge angle that changes in the vertical direction. Therefore, by changing the wedge angle according to the position in the vertical direction, the detection accuracy in the onboard sensor region 11 tends to increase and the display accuracy in the HUD display region 12 tends to increase. Here, from the viewpoint of reducing reflected double images in the HUD display region 12 and increasing the display accuracy in the HUD display region 12, the slope is preferably a negative value.

When the slope of the approximate straight line L4 of the partial wedge angle of the overall interlayer film is negative, the slope is preferably -0.005 mrad/100 mm or less, more preferably -0.008 mrad/100 mm or less, further preferably -0.01 mrad/100mm or less, and still further preferably -0.015 mrad/100mm or less, and is preferably -0.1 mrad/100mm or more, and more preferably -0.05 mrad/100mm or more. By setting the slope within the above range, the detection accuracy and display accuracy tend to be enhanced by appropriately changing the wedge angle, without impeding the visibility and the like of the laminated glass.

Further, when the slope of the approximate straight line L4 of the partial wedge angle of the overall interlayer film is positive, the slope is preferably 0.003 mrad/100 mm or more, more preferably 0.008 mrad/100 mm or more, and further preferably 0.01 mrad/100mm or more, and is preferably 0.1 mrad/100mm or less, and more preferably 0.05 mrad/100mm or less. By setting the slope of the approximate straight line L4 within the above range, the detection accuracy and display accuracy tend to be enhanced by appropriately changing the wedge angle, without impeding the visibility and the like of the laminated glass.

The approximate straight line L4 can be calculated by the same method as the approximate straight line L1 described above.

The thickness of the interlayer film 10 is not particularly limited, but is, for example, 100 µm or more and 2000 µm or less, preferably 200 µm or more and 1700 µm or less, and more preferably 300 µm or more and 1400 µm or less. By setting the thickness of the interlayer film to be more than or equal to the above lower limit, impact resistance can be increased, and adhesion with the laminated glass members and the like can be easily ensured. On the other hand, by setting the thickness to be less than or equal to the above upper limit, it is possible to prevent the thickness of the laminated glass from becoming thicker than necessary.

As described above, the thickness of the interlayer film varies depending on the position in the vertical direction, but the above-described thickness of the interlayer film is the thickness at the one edge 13A of the interlayer film 10.

### (Material of interlayer film)

The interlayer film of the present invention is formed of a resin layer. The resin constituting the resin layer is preferably a thermoplastic resin. By using a thermoplastic resin for the interlayer film, the laminated glass members can be easily adhered to each other by thermocompression bonding with the interlayer film interposed therebetween. The interlayer film may be constituted of a single resin layer or a plurality of resin layers.

Examples of the thermoplastic resin used in the interlayer film include a (meth)acrylic resin, a polyvinyl acetal resin, a polyvinyl alcohol resin (PVA), a polyurethane resin (PU), an ethylene-vinyl acetate copolymer resin (EVA), a saponified ethylene-vinyl acetate copolymer (EVOH), an ethylene-methacrylic acid copolymer resin, an ionomer resin, an isobutylene resin, a styrene-isoprene copolymer resin, a styrene-butadiene copolymer resin, and the like. In each resin layer, one type of thermoplastic resin may be used alone, or two or more types may be used in combination. Further, when a plurality of resin layers are provided, the thermoplastic resin of each resin layer may be of the same type or different types.

Among the thermoplastic resins described above, a polyvinyl acetal resin is more preferable. Using a polyvinyl acetal resin tends to enhance the impact resistance of the laminated glass, and tends to enhance the adhesive strength to the laminated glass members.

The polyvinyl acetal resin is not particularly limited as long as it is a polyvinyl acetal resin obtained by acetalizing a polyvinyl alcohol (PVA) with an aldehyde.

The aldehyde is not particularly limited, but an aldehyde having from 1 to 10 carbon atoms is generally preferably used. The aldehyde having from 1 to 10 carbon atoms is not particularly limited, and examples include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. These aldehydes may be used alone or in combination of two or more.

Among the above examples, n-butyraldehyde, n-hexylaldehyde, and n-valeraldehyde are preferred, and n-butyraldehyde is more preferred. Therefore, a polyvinyl butyral resin is preferred for the polyvinyl acetal resin.

The polyvinyl acetal resin generally has an acetal group, a hydroxyl group, and an acetyl group in a side chain. The polyvinyl acetal resin is preferably an unmodified polyvinyl acetal resin, but may be a modified polyvinyl acetal resin.

The modified polyvinyl acetal resin has a structure (modifying group) other than an acetal group, a hydroxyl group, and an acetyl group, and preferably has the modifying group in a side chain. Examples of the modifying group include a modifying group having a polyalkylene oxide structure in a side chain, a modifying group having an alkyl group (for example, about from 2 to 30 carbon atoms) other than an acetal group or acetyl group in a side chain, and the like.

**In** addition, in the interlayer film, one type of polyvinyl acetal resin may be used alone, or two or more types may be used in combination.

Further, when the interlayer film has a plurality of resin layers, it is preferred that each thermoplastic resin constituting each resin layer is a polyvinyl acetal resin. Moreover, when a plurality of resin layers are included, the thermoplastic resin of each resin layer may be of the same type or different types.

It is preferred that the interlayer film has a resin layer (hereinafter, sometimes referred to as "first resin layer") having a glass transition temperature of 15°C or higher. When the interlayer film includes a resin layer having a glass transition temperature of 15°C or higher, the penetration resistance, handleability, mechanical properties, and the like of the interlayer film tend to be enhanced, and the interlayer film can be suitably used as an interlayer film for laminated glass.

The glass transition temperature of the first resin layer is preferably 20°C or higher, more preferably 30°C or higher, and is, for example, 80°C or lower, preferably 60°C or lower, and more preferably 50°C or lower.

When the interlayer film is a single layer, the glass transition temperature can be determined by using a viscoelasticity measuring device to measure the viscoelasticity using the interlayer film as a measurement sample. Further, when the interlayer film has a plurality of layers, the viscoelasticity can be determined by peeling off each layer from the interlayer film, preparing a measurement sample from each obtained layer, and using a viscoelasticity measuring device to measure the viscoelasticity.

The measurement sample is stored for 12 hours at a room temperature of 23 ±2°C and a humidity of 25 ±5%. Next, the viscoelasticity is measured using a viscoelasticity measuring device "ARES-G2" manufactured by TA Instruments. Using parallel plates having a diameter of 8 mm as a jig, the measurement is performed in shear mode, under conditions of lowering the temperature from 100°C to -20°C at a cooling rate of 3 °C/min, at a frequency of 1 Hz and a strain of 1%. **In** the obtained measurement results, the peak temperature of the loss tangent is defined as the glass transition temperature Tg (°C).

When the interlayer film has a plurality of layers, the interlayer film may include a second resin layer having a glass transition temperature of less than 15°C in addition to the first resin layer. When the interlayer film has a second resin layer having a glass transition temperature of less than 15°C, the sound insulation properties of the interlayer film tend to be increased. From the viewpoint of enhancing the sound insulation properties, the glass transition temperature of the second resin layer is preferably 10°C or lower, more preferably 5°C or lower, and further preferably 0°C or lower. Further, the glass transition temperature of the second resin layer is not particularly limited, but from the viewpoint of enhancing mechanical properties such as the bending rigidity of the interlayer film, is preferably -20°C or higher.

The glass transition temperatures of the first and second resin layers can be adjusted by appropriately adjusting the type of resin used in the first resin layer, the composition of the resins, and the like. For example, the glass transition temperature can be increased by increasing the amount of hydroxyl groups in the polyvinyl acetal resin.

Each resin layer may further contain a plasticizer when the resin used is a thermoplastic resin. By including a plasticizer in the resin layer, the interlayer film becomes flexible, and as a result, the laminated glass also becomes flexible. Further, when the laminated glass members are an inorganic glass, it is also possible to increase the adhesion with the laminated glass members. When a polyvinyl acetal resin is used as the thermoplastic resin, a plasticizer is particularly effective when contained in the resin layer containing the thermoplastic resin.

Examples of the plasticizer include organic ester plasticizers such as monobasic organic acid esters and polybasic organic acid esters, and phosphorus plasticizers such as phosphate plasticizers and phosphite plasticizers. Among these, an organic ester plasticizer is preferable, and triethylene glycol-di-2-ethylhexanoate (3GO) is particularly preferable.

The content of the plasticizer is not particularly limited, but is, for example, 10 parts by mass or more and 100 parts by mass or less, and preferably 25 parts by mass or more and 70 parts by mass or less, with respect to 100 parts by mass of the thermoplastic resin in each resin layer.

From the viewpoint of the handleability and mechanical strength of the interlayer film, the content of the plasticizer in the first resin layer is preferably relatively low, for example, with respect to 100 parts by mass of the thermoplastic resin, 10 parts by mass or more and 50 parts by mass or less, preferably 20 parts by mass or more and 45 parts by mass or less, and more preferably 25 parts by mass or more and 40 parts by mass or less.

The content of the plasticizer with respect to 100 parts by mass the of thermoplastic resin in the second resin layer is, from the viewpoint of enhancing the flexibility of the laminated glass and enhancing penetration resistance and sound insulation properties, preferably larger than the content with respect to 100 parts by mass of the thermoplastic resin in the first resin layer. Specifically, the content is 25 parts by mass or more and 100 parts by mass or less, more preferably 45 parts by mass or more and 95 parts by mass or less, and further preferably 50 parts by mass or more and 90 parts by mass or less.

It is preferred that each resin layer has a thermoplastic resin, or a thermoplastic resin and a plasticizer, as a main component. Specifically, the total amount of the thermoplastic resin and plasticizer is, based on the total amount of each resin layer, preferably 50% by mass or more, more preferably 60% by mass or more, and further preferably 65% by mass or more and 100% by mass or less.

Other than a plasticizer, each resin layer constituting the interlayer film may appropriately contain known additives used in interlayer films. Examples of additives other than a plasticizer include a coloring agent such as a pigment or a dye, an ultraviolet absorber, an infrared absorber, a heat shielding agent, an antioxidant, a light stabilizer, an adhesive force regulator, an optical brightener, a crystal nucleating agent, and the like.

### (Laminated structure of interlayer film)

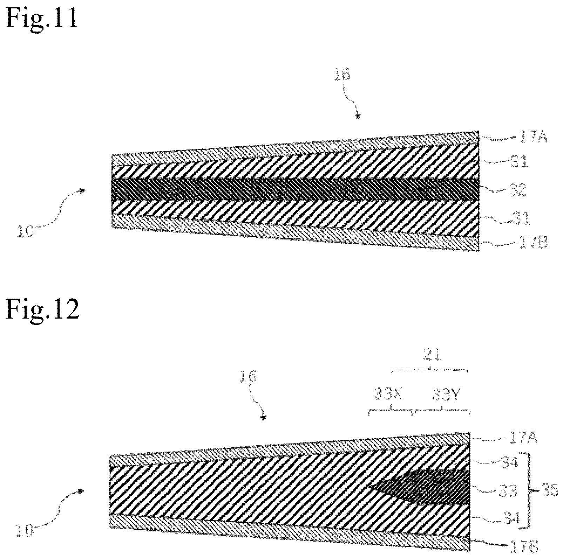

When the interlayer film is composed of a plurality of resin layers, and has a first resin layer and a second resin layer, as shown in Fig. 11, the interlayer film 10 preferably has a structure in which a first resin layer 31 is provided on both sides of a second resin layer 32. By having such a structure, it is possible to enhance the sound insulation properties while maintaining good mechanical strength, penetration resistance, adhesion with the laminated glass members of the interlayer film, and the like.

When the interlayer film 10 has the colored region 21 as described above, it is preferred that at least one resin layer of the interlayer film is a colored layer containing a coloring agent. Further, the coloring agent used is not particularly limited, and colorants conventionally mixed in interlayer films can be used. Colorants of blue, yellow, red, green, purple, white, black, and the like can be used. The colorant may be a pigment or a dye. The interlayer film can be colored in a desired color by using a coloring agent.

Examples of pigments that may be used in the interlayer film include carbon black, copper phthalocyanine pigments such as pigment blue, phthalocyanine pigments such as cobalt phthalocyanine pigment, anthraquinone pigments, perylene pigments, diketopyrrolopyrrole pigments, quinacridone pigments, perinone pigments, thioindigo pigments, isoindoline pigments, isoindolinone pigments, quinophthalone pigments, threne pigments, dioxazine pigments, pyrocholine pigments, fluorobin pigments, azo pigments, titanium oxide pigments, calcium carbonate pigments, metal oxide pigments, Ni complex pigments, other metal complex pigments, and the like.

Examples of dyes include azo dyes, cyanine dyes, triphenylmethane dyes, phthalocyanine dyes, anthraquinone dyes, naphthoquinone dyes, quinone imine dyes, methine dyes, azomethine dyes, squarylium dyes, acridine dyes, styryl dyes, coumarin dyes, quinoline dyes, nitro dyes, and the like. The dye may be a dispersed dye.

The pigments and dyes constituting the coloring agent may be blended into the resin as they are, or may be formed into an ink or a toner and then blended into the resin.

The content of the coloring agent used in the colored layer is not particularly limited, and may be adjusted so that the visible light transmittance of at least a part of the region where the colored layer is provided is less than 60%.

As described above, the colored region 21 is provided in a part of the interlayer film, and thus the colored layer 33 is also preferably provided in a part of the interlayer film 10. Specifically, as shown in Fig. 12, for example, the colored region 21 may have a laminated structure 35 that partially includes two resin layers 34, 34 and a colored layer 33 arranged between the two resin layers 34, 34. The colored layer 33 may have a structure such that it is embedded between the resin layers 34, 34. In the region of the laminated structure 35 where the colored layer 33 is absent, the resin layers 34, 34 are preferably integrated. The resin layers 34, 34 are not particularly limited, but are preferably the above-described first resin layer. Further, the colored layer 33 may also be formed of the first resin layer having a glass transition temperature of 15°C or higher.

The colored layer 33 may have a constant thickness, but generally it is better that the colored layer 33 have a region (gradation region 33X) in which the thickness continuously decreases and a region 33Y that is connected to the gradation region 33X and has a thickness that is roughly constant. However, the gradation region 33X may be omitted, and the gradation region 33Y may be omitted. When the interlayer film 10 has the region 33Y, it suffices that the visible light transmittance is less than 60% in at least in the region 33Y. Further, the visible light transmittance may be less than 60% in a part or all of the gradation region 33X, or the visible light transmittance may be 60% or more in all of the gradation region 33X. That is, in the interlayer film 10, a part or all of the region in which the gradation region 33X is provided may not be the colored region 21.

Further, when the colored layer 33 is provided, the number of layers in the region where the colored layer 33 is provided is not particularly limited, and the number of layers may be other than three layers. For example, the structure may have four layers, or five layers. In a four-layer structure, for example, in the structure shown in Fig. 11, the colored layer 33 may be provided between one first resin layer 31 and the second resin layer 32. The colored layer 33 is preferably provided partially, as shown in Fig. 12. Further, in the case of a five-layer structure, for example, in the structure shown in Fig. 11, instead of one first resin layer 31, the laminated structure 35 having a resin layer 34, a colored layer 33, and a resin layer 34 shown in Fig. 12 may be introduced.

### (Surface shape of interlayer film)

One or both surfaces of the interlayer film 10 may have an uneven shape. The surfaces of the interlayer film 10 are the surfaces of the laminated glass 16 that come into contact with the laminated glass members 17A and 17B.

It is preferred that the ten-point average roughness of at least one surface of the interlayer film 10 is 1 µm or more and less than 100 µm. When the ten-point average roughness of the surfaces of the interlayer film 10 is within the above range, bubbles are less likely to occur on the surfaces of the interlayer film 10 when the interlayer film is pressure-bonded to a laminated glass member. The ten-point average roughness is more preferably 5 µm or more and 85 µm or less, and further preferably 10 µm or more and 70 µm or less.

Further, it is preferred that the absolute value of the difference between the maximum value and the minimum value of the ten-point average roughness of at least one surface of the interlayer film 10 is less than 40 µm. In the interlayer film 10, by reducing the absolute value of the difference between the maximum value and the minimum value of the ten-point average roughness while keeping the ten-point average roughness of the surface within the above desired range, air bubbles are less likely to occur over the entire surface of the interlayer film 10 when pressure bonding the interlayer film to the laminated glass members.

The absolute value of the difference between the maximum value and the minimum value of the ten-point average roughness is more preferably 30 µm or less, and further preferably 20 µm or less. Moreover, the absolute value of the difference between the maximum value and the minimum value is not particularly limited, but from the viewpoint of ease of manufacture, the absolute value may be, for example, 3 µm or more, preferably 5 µm or more, and more preferably 8 µm or more.

The ten-point average roughness is ten-point average roughness (Rzjis94) measured in accordance with JIS B 0601-1994. For example, a "Surfcorder SE300" manufactured by Kosaka Laboratory Ltd. can be used as the measuring instrument for measuring the ten-point average roughness (Rzjis94). More specifically, the ten-point average roughness (Rzjis94) can be calculated using a stylus sensor with a tip radius of 2 µm and a tip angle of 60° under measurement conditions of a cutoff value of 2.5 mm at the time of measurement, a reference length of 2.5 mm, a measurement length of 12.5 mm, a preliminary length of 2.5 mm, and a stylus sensor movement rate of 0.5 mm/sec in an environment of 23°C and 30 RH%. When the surface of the interlayer film is embossed with score lines, the ten-point average roughness (Rzjis94) is measured by moving the stylus sensor a direction perpendicular to the direction of the score lines.

Further, in the present invention, the Rzjis94 may be measured at 10 points at equal intervals from the one edge 13A to the other edge 13B, and calculating the average value thereof. Further, the maximum value and the minimum value of the measured Rzjis94 are selected, and the absolute value of the difference between the maximum value and minimum value may be calculated as the absolute value of the difference between the maximum value and the minimum value of the ten-point average roughness.

It suffices that only one surface of the interlayer film 10 has the above-described ten-point average roughness and/or absolute value, but it is preferred that both surfaces may have the above-described ten-point average roughness and/or absolute value.

The method for forming the uneven shape on the interlayer film is not particularly limited. For example, unevenness may be formed on an interlayer film obtained by the production method described below by a lip embossing method, an embossing roll method, a calendar roll method, and the like.

### (Method for producing interlayer film)

The method for producing the interlayer film is not particularly limited. The interlayer film may be produced by a method similar to the method for producing conventional wedge interlayer films, and preferably is formed by extrusion molding. Specifically, each resin layer may be formed by extrusion molding a resin constituting each resin layer, or a resin composition containing an additive such as a plasticizer in addition to the resin. Further, when the interlayer film has a plurality of resin layers, it is preferable to form the interlayer film by coextrusion.

In the present invention, the maximum amount of deviation S1 and the maximum absolute value S2 of the difference in partial wedge angle with respect to the approximate straight line L2 are reduced so that the gap between the respective coordinates in the width direction of the mold outlet during extrusion molding, for example, can be reduced by manual or automatic adjustment. When automatically adjusting the gap at the mold outlet, it is preferable to adjust based on feedback control, for example. Specifically, the thickness of the interlayer film being produced is constantly measured inline, the difference between the target thickness profile and the measured thickness profile is fed back to the mold, and gap at the mold outlet is automatically adjusted in consideration of the difference in thickness. Further, when adjusting the gap manually, the maximum amount of deviation S1 and the maximum value S2 can be reduced by increasing the adjustment frequency.

Further, in the coextrusion, a coextruder that includes a plurality of extruders and a multilayer feedblock may be used. In the coextruder, it is preferred that the tip of each extruder is connected to the multilayer feed block via a molten resin transport pipe or the like.

In the coextruder, the resin or resin composition for forming each resin layer may be supplied from each extruder to the multilayer feedblock via the molten resin transport pipe or the like, merge at the multilayer feedblock, and be coextruded as an interlayer film having a plurality of layers. At this time, the thickness of each resin layer can be set by appropriately adjusting the amount of resin to be extruded. Further, the maximum amount of deviation S1 and the maximum value S2 can be adjusted at the mold outlet.

In addition, if necessary, the gap width of the channel through which each resin or resin composition passes may be adjusted in the extruder. Further, it is preferred that the flow path of the mold to be used is plated or the like so that the molten resin can easily flow.

### [Laminated glass]

The present invention further provides laminated glass. As described above, the laminated glass 16 includes the first and second laminated glass members 17A and 17B, and the interlayer film 10 arranged between the first and second laminated glass members 17A and 17B. The first and second laminated glass members 17A and 17B may be adhered to each other with the interlayer film 10 interposed therebetween.

### (First and second laminated glass members)

Examples of the first and second laminated glass members used in the laminated glass include a glass sheet. The glass sheet may be either an inorganic glass or an organic glass, but an inorganic glass is preferable. Examples of the inorganic glass include, but are not limited to, clear glass, float glass, tempered glass, colored glass, polished glass, patterned glass, wired glass, lined glass, ultraviolet absorbing glass, infrared reflecting glass, infrared absorbing glass, green glass, and the like.

As the organic glass, a glass that is generally referred to as "resin glass" is used, and examples thereof include various organic glass sheets such as a (meth)acrylic sheet like a polycarbonate sheet or a polymethyl methacrylate sheet, an acrylonitrile styrene copolymer sheet, an acrylonitrile butadiene styrene copolymer sheet, a polyester sheet such as a polyethylene terephthalate sheet, a fluorine resin sheet, a polyvinyl chloride sheet, a chlorinated polyvinyl chloride sheet, a polypropylene sheet, a polystyrene sheet, a polysulfone sheet, an epoxy resin sheet, a phenolic resin sheet, an unsaturated polyester resin sheet, and a polyimide resin sheet. The organic resin sheet may be subjected to an appropriate surface treatment.

The first and second laminated glass members may be made of the same kind of material or may be made of different materials. For example, one of the laminated glass members may be an inorganic glass and the other laminated glass member an organic glass, but it is preferred that the first and second laminated glass members are both either an inorganic glass or an organic glass.

The thickness of each glass sheet used for the first and second laminated glass members is not particularly limited, but is, for example, about 0.1 to 15 mm, and preferably 0.5 to 5 mm. The thickness of each glass sheet may be the same or different.

When the first and second laminated glass members have different thicknesses from each other, the difference in thickness between the laminated glass members may be 0.1 mm or more, and preferably 0.2 mm or more. Further, the difference in thickness between the first and second laminated glass members is not particularly limited, but may be, for example, 2 mm or less, and preferably 1 mm or less.

The first and second laminated glass members may be flat glass or curved glass. When one of the first and second laminated glass members is flat glass, it is preferred that the other is also flat glass, and when one is curved glass, it is preferred that the other is also curved glass.

For example, the curved glass preferably has a radius of curvature in the vertical direction of 4000 mm or more, more preferably 6000 mm or more, further preferably 8000 mm or more, and preferably 25000 mm or less, more preferably 20000 mm or less, and further preferably 15000 mm or less.

The method for producing the laminated glass is not particularly limited. The laminated glass may be obtained by sandwiching an interlayer film between two laminated glass members and pressure-bonding them together.

More specifically, the interlayer film is sandwiched between the first and second laminated glass members, and the air remaining between the two glass members and the interlayer film is removed by passing the laminated glass members and the interlayer film through a pressure roll or placing them in a rubber bag and vacuum suctioning. Then, the laminated glass members and the interlayer film are preliminarily adhered at about 70 to 110°C to obtain a laminated body. Next, the laminated body is placed in an autoclave or pressed and pressure-bonded at about 120 to 150°C and a pressure of 1 to 1.5 MPa. **In** this way, the laminated glass can be obtained.

In the above description, the laminated glass of the present invention is specifically described with reference to an example in which the laminated glass is used for the windshield of an automobile, but the laminated glass of the present invention may also be used for vehicles other than automobiles, such as trains. Further, the present invention is not required to be used for the windshield of an automobile, and may be used for the window glass of an automobile other than the windshield.

### <Second embodiment>

The above description is based on the premise that the interlayer film is used for the laminated glass of an automobile in which an onboard sensor is installed. However, before the interlayer film is used for the laminated glass, it may not be clear which region is to be the onboard sensor region or the HUD display region.

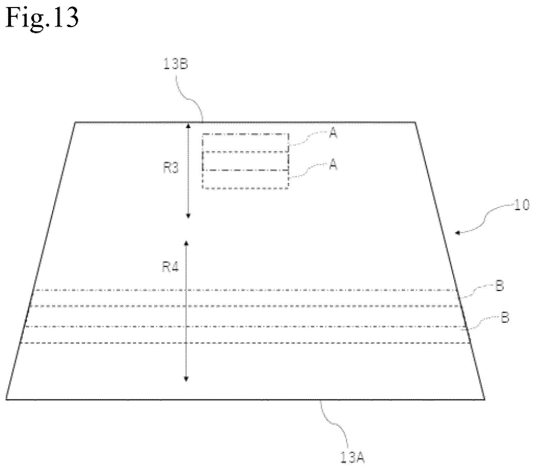

However, as described above, a region (hereinafter, also referred to as "region A") having a size of 100 to 200 mm at least one region in a range R3 where the distance from the one edge 13A in the direction from the one edge 13A toward the other edge 13B is 600 to 1000 mm, and preferably 700 to 1000 mm may generally serve as the onboard sensor region (see Fig. 13). Therefore, in the interlayer film 10, when the position of the onboard sensor region is not known, an arbitrarily selected region A may be considered as the onboard sensor region.

That is, in the second embodiment of the present invention, the interlayer film 10 has a maximum amount of deviation of the partial wedge angle with respect to the approximate straight line L1 of the partial wedge angle in the arbitrarily selected region A of 0.2 mrad or less.

Fig. 13 shows a embodiment that is based on the premise that the product width is 1000 mm, but the product width is not particularly limited as long as it is 740 mm or more. When the product width is 740 mm or more, the details are as described in the first embodiment.

Similarly, any region (hereinafter, also referred to as "region B") having a size of 200 to 500 mm at least one region in a range R4 where the distance from the one edge 13A in the direction from the one edge 13A toward the other edge 13B is 100 to 600 mm may generally serve as the HUD display region (see Fig. 13). Therefore, in the interlayer film 10, when, in addition to the position of the onboard sensor region, the position of the HUD display region is not known, the region B may be considered as the HUD display region.

Therefore, in the second embodiment, when, in the arbitrarily selected region B, a region is selected in a range of 50 mm toward one edge direction and the other edge direction from each point as a center, and an approximate straight line of the partial wedge angle in the region is taken as an approximate straight line L2 of the partial wedge angle of each point, it is preferred that a maximum absolute value of a difference between partial wedge angles with respect to the approximate straight line L2 at each point is 0.2 mrad or less.

In the second embodiment, the region A and the region B are regions corresponding to the onboard sensor region 11 and the HUD display region 12, respectively. Therefore, in the second embodiment, for configurations other than those described above as well, the various stipulations and various details described in relation to the onboard sensor region 11 in the first embodiment are also applicable as the various stipulations and various details relating to the region A in the second embodiment.

Similarly, the various stipulations and various details described in relation to the HUD display region 12 in the second embodiment are also applicable as the various stipulations and various details relating to the region B in the second embodiment.

Further, the details other than those relating to the onboard sensor region 11 and the HUD display region 12 are also the same as in the first embodiment, and therefore a description thereof is omitted here.

In addition, although a plurality of regions A may be selected in the range R3, it is preferred that at least one region A among the plurality of regions satisfies each of the stipulations described above. Similarly, although a plurality of regions B may also be selected in the range R4, it is preferred that one region B among the plurality of regions satisfies each of the stipulations described above.

### Examples

Hereinafter, the present invention will be explained in more detail with reference to examples, but the present invention is not limited to these examples in any way.

### [Example 1A]

### (Production of interlayer film)

A resin composition was obtained by mixing 40 parts by mass of a plasticizer (3GO) to 100 parts by mass of a polyvinyl acetal resin (average degree of polymerization 1700, hydroxyl group amount 30.3 mol%, acetalization degree 68.8 mol%, acetyl group amount 0.9 mol%). A wedge interlayer film was obtained by extruding the resin composition using a mold under conditions such that the mold outlet gap was asymmetrical with respect to the width direction so that the partial wedge angle was as shown by design profile DP of No. 1 (see Fig. 14) and while manually adjusting the gap of the mold outlet so that the actual measured profile did not deviate from the design profile DP. In the extrusion molding, the vertical direction was set to TD, and the lateral direction was set to MD. The obtained wedge interlayer film was embossed using an embossing roll method, and then cut to have a product width (length in the vertical direction) of 1000 mm and a length in the lateral direction of 1000 mm, thereby obtaining an interlayer film of Example 1A. The ten-point average roughness (Rzjis94) of each surface of the wedge interlayer film was 47 µm, and the absolute value of the difference between the maximum value and minimum value of the ten-point average roughness was 5 µm. Further, the glass transition temperature of the wedge interlayer film was 27°C. The interlayer film of Example 1A is based on the premise of having an onboard sensor region and a HUD display region, and the presumed positions of the onboard sensor region and HUD display region are as shown in the table.

The partial wedge angle of the obtained wedge interlayer film was measured along the vertical direction in accordance with the method described in the specification, and each specified value shown in the table was determined based on the measured partial wedge angle values.

### (Production of laminated glass)

The obtained interlayer film was sandwiched between two sheets of clear glass (1000 mm long × 1000 mm wide × 2.5 mm thick) to obtain a laminated body. The laminated body was placed in a rubber bag and degassed for 20 minutes at a vacuum level of 2.6 kPa, then transferred to an oven as it is in a degassed state, and further vacuum pressed while being held at 90°C for 30 minutes to subject the laminated body to preliminary pressure-bonding. The preliminarily pressure-bonded laminated body was pressure-bonded in an autoclave for 20 minutes at 135°C and a pressure of 1.2 MPa to obtain a laminated glass. The visible light transmittance at each position of the obtained laminated glass was 88%.

### [Examples 1B and 1C, and Comparative Example 1]

Example 1B was carried out in the same manner as Example 1A, except that the frequency of adjusting the mold outlet gap was changed. Example 1C was carried out in the same manner as Example 1A, except that the adjustment of the mold outlet gap was changed to feedback control. Comparative Example 1 was carried out in the same manner as Example 1A, except that the frequency of adjusting the mold outlet gap was changed.

### [Examples 2A to 2C, and Comparative Example 2]

Examples 2A to 2C and Comparative Example 2 were carried out in the same manner as Examples 1A to 1C and Comparative Example 1, except that extrusion molding was performed so that the partial wedge angle was based on design profile DP of No. 2 (see Fig. 14).

### [Examples 3A to 3C, and Comparative Example 3]

Examples 3A to 3C and Comparative Example 3 were carried out in the same manner as Examples 1A to 1C and Comparative Example 1, except that extrusion molding was performed so that the partial wedge angle was based on design profile DP of No. 3 (see Fig. 14).

### [Examples 4A to 4C, and Comparative Example 4]

Examples 4A to 4C and Comparative Example 4 were carried out in the same manner as Examples 1A to 1C and Comparative Example 1, except that extrusion molding was performed so that the partial wedge angle was based on design profile DP of No. 4 (see Fig. 14). It is also noted that Examples 4A to 4C and Comparative Example 4 are based on the premise that the interlayer film has an onboard sensor region but does not have a HUD display region.

### [Examples 5A to 5C, and Comparative Example 5]

Examples 5A to 5C and Comparative Example 5 were carried out in the same manner as Examples 1A to 1C and Comparative Example 1, except that extrusion molding was performed so that the partial wedge angle was based on design profile DP of No. 5 (see Fig. 15). It is also noted that Examples 5A to 5C and Comparative Example 5 are based on the premise that the interlayer film has an onboard sensor region but does not have a HUD display region.

### [Examples 6A to 6C, and Comparative Example 6]

Examples 6A to 6C and Comparative Example 6 were carried out in the same manner as Examples 6A to 6C and Comparative Example 6, except that extrusion molding was performed so that the partial wedge angle was based on design profile DP of No. 6 (see Fig. 15).

### [Examples 7A to 7C, and Comparative Example 7]

Examples 7A to 7C and Comparative Example 7 were carried out in the same manner as Examples 1A to 1C and Comparative Example 1, except that extrusion molding was performed so that the partial wedge angle was based on design profile DP of No. 7 (see Fig. 15).

### [Examples 8A to 8C, and Comparative Example 8]

Examples 8A to 8C and Comparative Example 8 were carried out in the same manner as Examples 1A to 1C and Comparative Example 1, except that extrusion molding was performed so that the partial wedge angle was based on design profile DP of No. 1 (see Fig. 15).

### [Examples 9A to 9C, and Comparative Example 9]

Examples 9A to 9C and Comparative Example 9 were carried out in the same manner as Examples 1A to 1C and Comparative Example 1, except that extrusion molding was performed so that the partial wedge angle was based on design profile DP of No. 9 (see Fig. 16).

### [Examples 10A to 10C, and Comparative Example 10]

Examples 10A to 10C and Comparative Example 10 were carried out in the same manner as Examples 1A to 1C and Comparative Example 1, except that extrusion molding was performed so that the partial wedge angle was based on design profile DP of No. 10 (see Fig. 16).

### [Examples 11A to 11C, and Comparative Example 11]

Examples 11A to 11C and Comparative Example 11 were carried out in the same manner as Examples 1A to 1C and Comparative Example 1, except that extrusion molding was performed so that the partial wedge angle was based on design profile DP of No. 11 (see Fig. 16).

### [Examples 12A to 12C, and Comparative Example 12]

Examples 12A to 12C and Comparative Example 12 were carried out in the same manner as Examples 1A to 1C and Comparative Example 1, except that extrusion molding was performed so that the partial wedge angle was based on design profile DP of No. 12 (see Fig. 16).

### [Examples 13A to 13C, and Comparative Example 13]

Examples 13A to 13C and Comparative Example 13 were carried out in the same manner as Examples 1A to 1C and Comparative Example 1, except that extrusion molding was performed so that the partial wedge angle was based on design profile DP of No. 13 (see Fig. 17).

### [Examples 14A to 14C, and Comparative Example 14]

Examples 14A to 14C and Comparative Example 14 were carried out in the same manner as Examples 1A to 1C and Comparative Example 1, except that extrusion molding was performed so that the partial wedge angle was based on design profile DP of No. 14 (see Fig. 17).

### [Examples 15A to 15C, and Comparative Example 15]

Examples 15A to 15C and Comparative Example 15 were carried out in the same manner as Examples 1A to 1C and Comparative Example 1, except that extrusion molding was performed so that the partial wedge angle was based on design profile DP of No. 15 (see Fig. 17).

### [Example 16A]

A first resin composition was obtained by mixing 40 parts by mass of a plasticizer (3GO) to 100 parts by mass of a polyvinyl acetal resin. In addition, a second resin composition was obtained by mixing, to 100 parts by mass of the polyvinyl acetal resin, 40 parts by mass of the plasticizer (3GO) and calcium carbonate (inorganic pigment, weight average particle size 5.0 µm) as a coloring agent so that the calcium carbonate was 5.9% by mass relative to 100% by weight of the composition (and the resulting colored layer).

The first resin composition was supplied to a first extruder. Further, the second resin composition was supplied to a second extruder. A multilayer feed block was attached to the tip of a first molten resin transport pipe connected to the tip of the first extruder and to the tip of a second molten resin transport pipe connected to the tip of the second extruder, and as shown in Fig. 12, an interlayer having a laminated structure 35 in which a colored layer 33 is embedded between resin layers 34, 34 in some regions was obtained by coextruding while adjusting the amount of each resin composition to be extruded. At this time, a wedge interlayer film was obtained while manually adjusting the gap of the mold outlet so that the actual measured profile did not deviate from the designed profile DP.

Then, in the same manner as in Example 1, embossing was carried out, and after that a laminated glass was produced. The wedge interlayer film had a product width of 1800 mm, and the clear glass used to obtain the laminated glass was also 1800 mm × 1000 mm.

The interlayer film of Example 16A is based on the premise of having an onboard sensor region, a HUD display region, and a colored region, and the presumed positions of the onboard sensor region, HUD display region, and colored region are as shown in the table. Further, in the obtained laminated glass, the colored region 21 had a visible light transmittance of 8% in the region with the lowest visible light transmittance. On the other hand, the visible light transmittance in the region where the colored layer 33 was not provided was 88%.

### [Examples 16B and 16C, and Comparative Example 16]

Example 16B was carried out in the same manner as Example 16A, except that the frequency of adjusting the mold outlet gap was changed. Example 16C was carried out in the same manner as Example 16A, except that the adjustment of the mold outlet gap was changed to feedback control. Comparative Example 16 was carried out in the same manner as Example 1A, except that the frequency of adjusting the mold outlet gap was changed.

### <Evaluation methods>

### [Transmitted double images for onboard sensor]

The laminated glass obtained in each example and comparative example was evaluated as follows. An object at the distance shown for each example and comparative example was visually confirmed from a position 10 cm from the glass surface in the direction toward the opposite side of the object in the onboard sensor region, and the presence or absence of transmitted double images was evaluated. The observation results of 100 evaluators were evaluated using the following evaluation criteria.
A: Transmitted double images recognized by less than 20 observers
B: Transmitted double images recognized by 20 or more, but less than 50 observers
C: Transmitted double images recognized by 50 or more, but less than 80 observers
D: Transmitted double images recognized by 80 or more observers

### [Maximum reflected double images in HUD image]

The laminated glass obtained in each example and comparative example was evaluated as follows. An image was projected onto the HUD display region from an HUD display device (vertical direction viewing angle (FOV) of the HUD display image: 2.5°, focal length 3 m), the HUD display region was observed by 100 evaluators from a position 1000 mm from the inner surface of the laminated glass, and evaluated by the evaluators using the following evaluation criteria.
A: Reflected double images recognized by less than 20 observers
B: Reflected double images recognized by 20 or more, but less than 50 observers
C: Reflected double images recognized by 50 or more, but 80 or less observers
D: Reflected double images recognized by 80 or more observers

**[Table 1]**

| | | | Comp. Ex. 1 | Example 1A | Example 1B | Example 1C | Comp. Ex. 2 | Example 2A | Example 2B | Example 2C | Comp. Ex. 3 | Example 3A | Example 3B | Example 3C | Comp. Ex. 4 | Example 4A | Example 4B | Example 4C |
|---|---|---|---|---|---|---|---|---|---|---|---|---|---|---|---|---|---|---|
| Profile NO. | | | Profile NO. 1 | | | | Profile NO. 2 | | | | Profile NO. 3 | | | | Profile NO. 4 | | | |
| Thickness at one edge of interlayer film | | µm | 760 | ← | ← | ← | 760 | ← | ← | ← | 760 | ← | ← | ← | 760 | ← | ← | ← |
| Average wedge angle of interlayer film | | mrad | 0.1 | 0.1 | 0.1 | 0.1 | 0.43 | 0.43 | 0.43 | 0.43 | 0.26 | 0.26 | 0.26 | 0.26 | 0.06 | 0.06 | 0.06 | 0.06 |
| Slope of approximate straight line L4 of overall interlayer film | | mrad/100mm | 0 | 0 | 0 | 0 | -0.035 | -0.035 | -0.035 | -0.035 | -0.066 | -0.066 | -0.066 | -0.066 | 0.025 | 0.025 | 0.025 | 0.025 |
| Onboard sensor region | Start point | mm | 750 | ← | ← | ← | 800 | ← | ← | ← | 750 | ← | ← | ← | 750 | ← | ← | ← |
| | End point | mm | 850 | ← | ← | ← | 900 | ← | ← | ← | 900 | ← | ← | ← | 950 | ← | ← | ← |
| Slope of L1 in onboard sensor region | | mrad/100mm | 0.002 | 0.003 | 0.001 | 0.000 | -0.200 | -0.199 | -0.201 | -0.202 | 0.001 | 0.002 | 0.000 | -0.001 | -0.003 | -0.002 | -0.004 | -0.005 |
| Maximum amount of deviation S1 of partial wedge angle from L1 | | mrad | 0.24 | 0.17 | 0.12 | 0.05 | 0.22 | 0.16 | 0.11 | 0.09 | 0.32 | 0.18 | 0.13 | 0.07 | 0.21 | 0.17 | 0.14 | 0.07 |
| Average value of partial wedge angle in onboard sensor region | | mrad | 0.10 | 0.10 | 0.10 | 0.10 | 0.25 | 0.25 | 0.25 | 0.25 | 0.00 | 0.00 | 0.00 | 0.00 | 0.20 | 0.20 | 0.20 | 0.20 |
| HUD display region | Start point | mm | 200 | ← | ← | ← | 200 | ← | ← | ← | 200 | ← | ← | ← | ← | ← | ← | ← |
| | End point | mm | 600 | ← | ← | ← | 550 | ← | ← | ← | 500 | ← | ← | ← | ← | ← | ← | ← |
| Slope of L2 in HUD display region | Maximum value | mrad/100mm | 0.004 | 0.005 | 0.003 | 0.002 | 0.003 | 0.004 | 0.002 | 0.001 | 0.003 | 0.004 | 0.002 | 0.001 | - | - | - | - |
| | Minimum value | mrad/100mm | -0.003 | -0.002 | -0.004 | -0.005 | -0.004 | -0.003 | -0.005 | -0.006 | -0.25 | -0.249 | -0.251 | -0.252 | - | - | - | - |
| Presence/absence of site where absolute value of slope of L2 is less than 0.005 mrad/100 mm | | | present | present | present | present | present | present | present | present | present | present | present | present | - | - | - | - |
| Absolute value S2 of difference between L2 and partial wedge angle | | mrad | 0.25 | 0.18 | 0.11 | 0.06 | 0.21 | 0.14 | 0.11 | 0.05 | 0.24 | 0.19 | 0.13 | 0.08 | - | - | - | - |
| Average value of partial wedge angle in HUD display region | | mrad | 0.10 | 0.10 | 0.10 | 0.10 | 0.50 | 0.50 | 0.50 | 0.50 | 0.33 | 0.33 | 0.33 | 0.33 | - | - | - | - |
| Difference between average values of partial wedge angles (HUD display region - onboard sensor region) | | mrad | 0.00 | 0.00 | 0.00 | 0.00 | 0.25 | 0.25 | 0.25 | 0.25 | 0.33 | 0.33 | 0.33 | 0.33 | - | - | - | - |
| Average value of partial wedge angle in region from one edge to onboard sensor region | | mrad | 0.10 | 0.10 | 0.10 | 0.10 | 0.46 | 0.46 | 0.46 | 0.46 | 0.34 | 0.34 | 0.34 | 0.34 | 0.01 | 0.01 | 0.01 | 0.01 |
| Colored region | Start point | mm | - | - | - | - | - | - | - | - | - | - | - | - | - | - | - | - |
| | End point | mm | - | - | - | - | - | - | - | - | - | - | - | - | - | - | - | - |
| Average value of partial wedge angle in colored region | | mrad | - | - | - | - | - | - | - | - | - | - | - | - | - | - | - | - |
| Distance between onboard sensor and object | | m | 30 | ← | ← | ← | 15 | ← | ← | ← | 100 | ← | ← | ← | 30 | ← | ← | |
| Transmitted double images for onboard sensor | | mrad | D | C | B | A | D | C | B | A | D | C | B | A | D | C | B | A |
| Maximum reflected double images of HUD image | | - | D | C | B | A | C | B | B | A | D | C | B | A | - | - | - | - |

**[Table 2]**

| | | | Comp. Ex. 5 | Example 5A | Example 5B | Example 5C | Comp. Ex. 6 | Example 6A | Example 6B | Example 6C | Comp. Ex. 7 | Example 7A | Example 7B | Example 7C | Comp. Ex. 8 | Example 8A | Example 8B | Example 8C |
|---|---|---|---|---|---|---|---|---|---|---|---|---|---|---|---|---|---|---|
| Profile NO. | | | Profile NO. 5 | | | | Profile NO. 6 | | | | Profile NO. 7 | | | | Profile NO. 8 | | | |
| Thickness at one edge of interlayer film | | µm | 760 | ← | ← | ← | 760 | ← | ← | ← | 760 | ← | ← | ← | 760 | ← | ← | ← |
| Average wedge angle of interlayer film | | mrad | -0.06 | -0.06 | -0.06 | -0.06 | 0.22 | 0.22 | 0.22 | 0.22 | 0.22 | 0.22 | 0.22 | 0.22 | 0.22 | 0.22 | 0.22 | 0.22 |
| Slope of approximate straight line L4 of overall interlayer film | | mrad/100mm | -0.025 | -0.025 | -0.025 | -0.025 | -0.05 | -0.05 | -0.05 | -0.05 | -0.041 | -0.041 | -0.041 | -0.041 | -0.051 | -0.051 | -0.051 | -0.051 |
| Onboard sensor region | Start point | mm | 750 | ← | ← | ← | 700 | ← | ← | ← | 750 | ← | ← | ← | 800 | ← | ← | ← |
| | End point | mm | 950 | ← | ← | ← | 850 | ← | ← | ← | 850 | ← | ← | ← | 950 | ← | ← | ← |
| Slope of L1 in onboard sensor region | | mrad/100mm | 0.003 | 0.004 | 0.002 | 0.001 | 0.003 | 0.004 | 0.002 | 0.001 | -0.002 | -0.001 | -0.003 | -0.003 | 0.001 | 0.002 | 0.000 | 0.000 |
| Maximum amount of deviation S1 of partial wedge angle from L1 | | mrad | 0.23 | 0.16 | 0.12 | 0.06 | 0.29 | 0.11 | 0.05 | 0.09 | 0.30 | 0.10 | 0.05 | 0.07 | 0.33 | 0.17 | 0.12 | 0.08 |
| Average value of partial wedge angle in onboard sensor region | | mrad | -0.20 | -0.20 | -0.20 | -0.20 | 0.10 | 0.10 | 0.10 | 0.10 | 0.10 | 0.10 | 0.10 | 0.10 | 0.00 | 0.00 | 0.00 | 0.00 |
| HUD display region | Start point | mm | - | ← | ← | ← | 200 | ← | ← | ← | 200 | ← | ← | ← | 200 | ← | ← | ← |
| | End point | mm | - | ← | ← | ← | 600 | ← | ← | ← | 600 | ← | ← | ← | 650 | ← | ← | ← |
| Slope of L2 in HUD display region | Maximum value | mrad/100mm | - | - | - | - | 0.001 | 0.002 | 0.000 | -0.001 | -0.06 | -0.059 | -0.061 | -0.062 | 0.004 | 0.005 | 0.003 | 0.002 |
| | Minimum value | mrad/100mm | - | - | - | - | -0.2 | -0.199 | -0.201 | -0.202 | -0.08 | -0.079 | -0.081 | -0.082 | -0.22 | -0.219 | -0.221 | -0.222 |
| Presence/absence of site where absolute value of slope of L2 is less than 0.005 mrad/100 mm | | - | - | - | - | - | present | present | present | present | absent | absent | absent | absent | present | present | present | present |
| Absolute value S2 of difference between L2 and partial wedge angle | | mrad | - | - | - | - | 0. 24 | 0.18 | 0.12 | 0.06 | 0.23 | 0.16 | 0.11 | 0.07 | 0.23 | 0.18 | 0.07 | 0.08 |
| Average value of partial wedge angle in HUD display region | | mrad | - | - | - | - | 0.20 | 0.20 | 0.20 | 0.20 | 0.25 | 0.25 | 0.25 | 0.25 | 0.27 | 0.27 | 0.27 | 0.27 |
| Difference between average values of partial wedge angles (HUD display region - onboard sensor region) | | mrad | - | - | - | - | 0.10 | 0.10 | 0.10 | 0.10 | 0.15 | 0.15 | 0.15 | 0.15 | 0.27 | 0.27 | 0.27 | 0.27 |
| Average value of partial wedge angle in region from one edge to onboard sensor region | | mrad | -0.01 | -0.01 | -0.01 | -0.01 | 0.26 | 0.26 | 0.26 | 0.26 | 0.26 | 0.26 | 0.26 | 0.26 | 0.27 | 0.27 | 0.27 | 0.27 |
| Colored region | Start point | mm | - | - | - | - | - | - | - | - | - | - | - | - | - | - | - | - |
| | End point | mm | - | - | - | - | - | - | - | - | - | - | - | - | - | - | - | - |
| Average value of partial wedge angle in colored region | | mrad | - | - | - | - | - | - | - | - | - | - | - | - | - | - | - | - |
| Distance between onboard sensor and object | | m | 15 | ← | ← | ← | 100 | ← | ← | ← | 100 | ← | ← | ← | 30 | ← | ← | ← |
| Transmitted double images for onboard sensor | | mrad | D | C | B | A | D | B | A | A | D | A | A | A | D | C | B | A |
| Maximum reflected double images of HUD image | | - | - | - | - | - | D | C | B | A | D | C | B | A | D | C | A | A |

**[Table 3]**

| | | | Comp. Ex. 9 | Example 9A | Example 9B | Example 9C | Comp. Ex. 10 | Example 10A | Example 10B | Example 10C | Comp. Ex. 11 | Example 11A | Example 11B | Example 11C | Comp. Ex. 12 | Example 12A | Example 12B | Example 12C |
|---|---|---|---|---|---|---|---|---|---|---|---|---|---|---|---|---|---|---|
| Profile NO. | | | Profile NO. 9 | | | | Profile NO. 10 | | | | Profile NO. 11 | | | | Profile NO. 12 | | | |
| Thickness at one edge of interlayer film | | µm | 760 | ← | ← | ← | 760 | ← | ← | ← | 760 | ← | ← | ← | 760 | ← | ← | ← |
| Average wedge angle of interlayer film | | mrad | 0.37 | 0.37 | 0.37 | 0.37 | 0.33 | 0.33 | 0.33 | 0.33 | 0.3 | 0.3 | 0.3 | 0.3 | *0.4* | 0.4 | *0.4* | *0.4* |
| Slope of approximate straight line L4 of overall interlayer film | | mrad/100mm | -0.014 | -0.014 | -0.014 | -0.014 | 0.003 | 0.003 | 0.003 | 0.003 | -0.027 | -0.027 | -0.027 | -0.027 | -0.007 | -0.007 | -0.007 | -0.007 |
| Onboard sensor region | Start point | mm | 750 | ← | ← | ← | 700 | ← | ← | ← | 700 | ← | ← | ← | 750 | ← | ← | ← |
| | End point | mm | 850 | ← | ← | ← | 800 | ← | ← | ← | 850 | ← | ← | ← | 850 | ← | ← | ← |
| Slope of L1 in onboard sensor region | | mrad/100mm | -0.007 | -0.006 | -0.008 | -0.006 | -0.001 | 0.000 | -0.002 | -0.002 | 0.000 | 0.001 | -0.001 | -0.002 | 0.001 | 0.002 | 0000 | -0.001 |
| Maximum amount of deviation S1 of partial wedge angle from L1 | | mrad | 0.21 | 0.17 | 0.12 | 0.08 | 0.23 | 0.17 | 0.12 | 0.08 | 0.21 | 0.17 | 0.12 | 0.08 | 0.23 | 0.17 | 0.12 | 0.08 |
| Average value of partial wedge angle in onboard sensor region | | mrad | 0.33 | 0.33 | 0.33 | 0.33 | 0.30 | 0.30 | 0.30 | 0.30 | 0.20 | 0.20 | 0.20 | 0.20 | 0.40 | 0.40 | 0.40 | 0.40 |
| HUD display region | Start point | mm | 130 | ← | ← | ← | 250 | ← | ← | ← | 200 | ← | ← | ← | 200 | ← | ← | ← |
| | End point | mm | 530 | ← | ← | ← | 550 | ← | ← | ← | 600 | ← | ← | ← | 600 | ← | ← | ← |
| Slope of L2 in HUD display region | Maximum value | mrad/100mm | 0.005 | 0.006 | 0.004 | 0.003 | 0.005 | 0.006 | 0.004 | 0.003 | 0.004 | 0.005 | 0.003 | 0.002 | 0.05 | 0.051 | 0.049 | 0.048 |
| | Minimum value | mrad/100mm | -0.005 | -0.004 | -0.006 | -0.007 | -0.004 | -0.003 | -0.005 | -0.006 | -0.203 | -0.202 | -0.204 | -0.205 | -0.1 | -0.099 | -0.101 | -0.102 |
| Presence/absence of site where absolute value of slope of L2 is less than 0.005 mrad/100 mm | | - | present | present | present | present | present | present | present | present | present | present | present | present | present | present | present | present |
| Absolute value S2 of difference between L2 and partial wedge angle | | mrad | 0.19 | 0.24 | 0.18 | 0.25 | 0.17 | 0.13 | 0.11 | 0.09 | 0.23 | 0.16 | 0.12 | 0.09 | 0.23 | 0.16 | 0.09 | 0.05 |
| Average value of partial wedge angle in HUD display region | | mrad | 0.40 | 0.40 | 0.40 | 0.40 | 0.40 | 0.40 | 0.40 | 0.40 | 0.28 | 0.28 | 0.28 | 0.28 | 0.40 | 0.40 | 0.40 | 0.40 |
| Difference between average values of partial wedge angles (HUD display region - onboard sensor region) | | mrad | 0.07 | 0.07 | 0.07 | 0.07 | 0.10 | 0.10 | 0.10 | 0.10 | 0.08 | 0.08 | 0.08 | 0.08 | 0.00 | 0.00 | 0.00 | 000 |
| Average value of partial wedge angle in region from one edge to onboard sensor region | | mrad | 0.40 | 0.40 | 0.40 | 0.40 | 0.34 | 0.34 | 0.34 | 0.34 | 0.30 | 0.30 | 0.30 | 0.30 | 0.40 | 0.40 | 0.40 | 0.40 |
| Colored region | Start point | mm | - | - | - | - | - | - | - | - | - | - | - | - | - | - | - | - |
| | End point | mm | - | - | - | - | - | - | - | - | - | - | - | - | - | - | - | - |
| Average value of partial wedge angle in colored region | | mrad | - | - | - | - | - | - | - | - | - | - | - | - | - | - | - | - |
| Distance between onboard sensor and object | | m | 15 | ← | ← | ← | 15 | ← | ← | ← | 15 | ← | ← | ← | 15 | ← | ← | ← |
| Transmitted double images for onboard sensor | | mrad | D | C | B | A | D | C | B | A | D | C | B | A | D | C | B | A |
| Maximum reflected double irrages of HUD image | | - | C | D | C | D | C | B | B | A | D | C | B | A | D | C | A | A |

**[Table 4]**

| | | | Comp. Ex. 13 | Example 13A | Example 13B | Example 13C | Comp. Ex. 14 | Example 14A | Example 14B | Example 14C | Comp. Ex. 15 | Example 15A | Example 15B | Example 15C | Comp. Ex. 16 | Example 16A | Example 16B | Example 16C |
|---|---|---|---|---|---|---|---|---|---|---|---|---|---|---|---|---|---|---|
| Profile NO. | | | Profile NO. 13 | | | | Profile NO. 14 | | | | Profile NO. 15 | | | | Profile NO. 16 | | | |
| Thickness at one edge of interlayer film | | µm | 760 | ← | ← | ← | 760 | ← | ← | ← | 760 | ← | ← | ← | 760 | ← | ← | ← |
| Average wedge angle of interlayer film | | mrad | 0.16 | 0.16 | 0.16 | 0.16 | 0.09 | 0.09 | 0.09 | 0.09 | 0.27 | 0.27 | 0.27 | 0.27 | 0.28 | 0.28 | 0.28 | 0.28 |
| Slope of approximate straight line L4 of overall interlayer film | | mrad/100mm | -0.059 | -0.059 | -0.059 | -0.059 | -0.027 | -0.027 | -0.027 | -0.027 | -0.033 | -0.033 | -0.033 | -0.033 | -0.036 | -0.036 | -0.036 | -0.036 |
| Onboard sensor region | Start point | mm | 750 | ← | ← | ← | 800 | ← | ← | ← | 800 | ← | ← | ← | 700 | ← | ← | ← |
| | End point | mm | 850 | ← | ← | ← | 900 | ← | ← | ← | 900 | ← | ← | ← | 800 | ← | ← | ← |
| Slope of L1 in onboard sensor region | | mrad/100mm | -0.075 | -0.074 | -0.076 | -0.077 | -0.001 | 0000 | -0.002 | -0.003 | -0.002 | -0.001 | -0.003 | -0.004 | 0000 | 0.001 | -0.001 | -0.002 |
| Maximum amount of deviation S1 of partial wedge angle from L1 | | mrad | 0.25 | 0.17 | 0.12 | 0.08 | 0.27 | 0.17 | 0.12 | 0.08 | 0.23 | 0.17 | 0.12 | 0.08 | 0.23 | 0.17 | 0.12 | 0.08 |
| Average value of partial wedge angle in onboard sensor region | | mrad | 0.15 | 0.15 | 0.15 | 0.15 | -0.10 | -0.10 | -0.10 | -0.10 | 0.00 | 0.00 | 0.00 | 000 | 0.25 | 0.25 | 0.25 | 0.25 |
| HUD display region | Start point | mm | 200 | ← | ← | ← | 200 | ← | ← | ← | 250 | ← | ← | ← | 200 | ← | ← | ← |
| | End point | mm | 600 | ← | ← | ← | 600 | ← | ← | ← | 550 | ← | ← | ← | 600 | ← | ← | ← |
| Slope of L2 in HUD display region | Maximum value | mrad/100mm | 0.05 | 0.051 | 0.049 | 0.048 | 0.01 | 0.011 | 0.009 | 0.008 | 0.03 | 0.031 | 0.029 | 0.028 | -0.015 | -0.014 | -0.016 | -0.017 |
| | Minimum value | mrad/100mm | -0.208 | -0.207 | -0.209 | -0.210 | -0.007 | -0.006 | -0.008 | -0.009 | -0.023 | -0.022 | -0.024 | -0.025 | 0.042 | 0.043 | 0.041 | 0.040 |
| Presence/absence of site where absolute value of slope of L2 is less than 0.005 mrad/100 mm | | - | present | present | present | present | present | present | present | present | present | present | present | present | present | present | present | present |
| Absolute value S2 of difference between L2 and partial wedge angle | | mrad | 0.23 | 0.18 | 0.11 | 0.08 | 0.19 | 0.19 | 0.14 | 0.08 | 0.18 | 0.17 | 0.13 | 0.07 | 0.23 | 0.18 | 0.12 | 0.07 |
| Average value of partial wedge angle in HUD display region | | mrad | 0.15 | 0.15 | 0.15 | 0.15 | 0.20 | 0.20 | 0.20 | 0.20 | 0.45 | 0.45 | 0.45 | 0.45 | 0.53 | 0.53 | 0.53 | 0.53 |
| Difference between average values of partial wedge angles (HUD display region - onboard sensor region) | | mrad | 0.00 | 0.00 | 0.00 | 0.00 | 0.30 | 0.30 | 0.30 | 0.30 | 0.45 | 0.45 | 0.45 | 0.45 | 0.28 | 0.28 | 0.28 | 0.28 |
| Average value of partial wedge angle in region from one edge to onboard sensor region | | mrad | 0.25 | 0.25 | 0.25 | 0.25 | 0.14 | 0.14 | 0.14 | 0.14 | 0.34 | 0.34 | 0.34 | 0.34 | 0.52 | 0.52 | 0.52 | 0.52 |
| Colored region | Start point | mm | - | - | - | - | - | - | - | - | - | - | - | - | 850 | ← | ← | ← |
| | End point | mm | - | - | - | - | - | - | - | - | - | - | - | - | 1800 | ← | ← | ← |
| Average value of partial wedge angle in colored region | | mrad | - | - | - | - | - | - | - | - | - | - | - | - | 0.11 | ← | ← | ← |
| Distance between onboard sensor and object | | m | 15 | ← | ← | ← | 15 | ← | ← | ← | 100 | ← | ← | ← | 15 | ← | ← | ← |
| Transmitted double images for onboard sensor | | mrad | D | C | B | A | D | C | B | A | D | C | B | A | D | C | B | A |
| Maximum reflected double images of HUD image | | - | D | C | B | A | C | C | B | A | C | C | B | A | D | C | B | A |

As shown in each of the above tables, in each example, transmitted double images were enabled to be suppressed in the observed image based on the light rays incident on the onboard sensor via the onboard sensor region as the maximum amount of deviation S1 of the partial wedge angle from the approximate straight line L1 determined in the onboard sensor region becomes smaller. On the other hand, in each of the comparative examples, since the maximum amount of deviation S1 was large, transmitted double images could not be sufficiently suppressed in the observed image for the onboard sensor.

In addition, in the examples in which the maximum absolute value S2 of the difference between the approximate straight line L2 and the partial wedge angle determined in the HUD display region was 0.2 mrad or less, an HUD image in which the occurrence of reflected double images was suppressed could be displayed on the HUD display region.

### Reference Signs List

- 10: interlayer film for laminated glass
- 11: onboard sensor region
- 12: HUD display region
- 13A: one edge
- 13B: the other edge
- 16: laminated glass
- 17A, 17B: laminated glass members
- 19: shielding portion
- 20: region on the one edge side
- 21: colored region
- 31: first resin layer
- 32: second resin layer
- 33: colored layer
- 34: resin layer
- DP: design profile
- AP: actual measured profile
- L1, L2: approximate straight line
- S1: maximum amount of deviation
- S2: maximum absolute value of difference in partial wedge angles with respect to approximate straight line L2
- α: wedge angle

## Claims

1. An interlayer film for laminated glass comprising an onboard sensor region, a maximum amount of deviation of a partial wedge angle with respect to an approximate straight line L1 of the partial wedge angle in the onboard sensor region being 0.2 mrad or less.

2. An interlayer film for laminated glass having a length of 740 mm or more from one edge to the other edge, a maximum amount of deviation of a partial wedge angle with respect to an approximate straight line L1 of the partial wedge angle in a region A having a size of 100 to 200 mm at least one region in a range of 600 to 1000 mm from the one edge toward the other edge being 0.2 mrad or less.

3. The interlayer film for laminated glass according to claim 1 or 2, wherein the approximate straight line L1 has a slope of 0.7 mrad/100 mm or less.

4. The interlayer film for laminated glass according to claim 1 or 2, wherein an average value of the partial wedge angle in the onboard sensor region or the region A is 0.1 mrad or more.

5. The interlayer film for laminated glass according to claim 1 or 2, wherein an average value of the partial wedge angle in the onboard sensor region or the region A is -0.05 mrad or more and less than 0.05 mrad.

6. The interlayer film for laminated glass according to claim 1 or 2, wherein an average value of the partial wedge angle in the onboard sensor region or the region A is less than -0.1 mrad.

7. The interlayer film for laminated glass according to claim 1 or 2, wherein the interlayer film comprises a part where the partial wedge angle changes in a region outside the onboard sensor region or a region outside the region A.

8. The interlayer film for laminated glass according to claim 1, wherein the interlayer film comprises a HUD display region, and comprises a part where the partial wedge angle changes outside the HUD display region.

9. The interlayer film for laminated glass according to claim 2, wherein the interlayer film comprises a part where the partial wedge angle changes outside a region B that has a size of 200 to 500 mm at least one region in a range of 100 to 600 mm from the one edge toward the other edge.

10. The interlayer film for laminated glass according to claim 1, wherein
the interlayer film comprises a HUD display region, and
an absolute value of a difference between an average value of the partial wedge angle in the HUD display region and an average value of the partial wedge angle in the onboard sensor region is 0.01 mrad or more.

11. The interlayer film for laminated glass according to claim 2, wherein an absolute difference between an average value of the partial wedge angle in a region B that has a size of 200 to 500 mm at least one region in a range of 100 to 600 mm from the one edge toward the other edge and an average value of the partial wedge angle in the region A is 0.01 mrad or more.

12. The interlayer film for laminated glass according to claim 1, wherein
the interlayer film includes a HUD display region, and
when, in the HUD display region, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where an absolute value of a slope of the approximate straight line L2 is less than 0.005 mrad/100 mm.

13. The interlayer film for laminated glass according to claim 2, wherein when, in a region B that has a size of 200 to 500 mm at least one region in a range of 100 to 600 mm from the one edge toward the other edge, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where an absolute value of a slope of the approximate straight line L2 is less than 0.005 mrad/100 mm.

14. The interlayer film for laminated glass according to claim 1, wherein
the interlayer film includes a HUD display region, and
when, in the HUD display region, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where a slope of the approximate straight line L2 is -0.005 mrad/100 mm or less.

15. The interlayer film for laminated glass according to claim 2, wherein when, in a region B that has a size of 200 to 500 mm at least one region in a range of 100 to 600 mm from the one edge toward the other edge, a region is selected in a range of 50 mm toward one edge direction and the other edge direction from each point as a center, and an approximate straight line of the partial wedge angle in the region is taken as an approximate straight line L2 of the partial wedge angle of each point, the interlayer film includes a part where a slope of the approximate straight line L2 is -0.005 mrad/100 mm or less.

16. The interlayer film for laminated glass according to claim 1 or 2, wherein an approximate straight line L4 of the partial wedge angle of the overall interlayer film from the one edge to the other edge has a positive or negative slope.

17. The interlayer film for laminated glass according to claim 1, wherein
the interlayer film includes a HUD display region, and
when, in the HUD display region, a region is selected in a range of 50 mm toward one edge direction and the other edge direction from each point as a center, and an approximate straight line of the partial wedge angle in the region is taken as an approximate straight line L2 of the partial wedge angle of each point, a maximum absolute value of a difference between partial wedge angles with respect to the approximate straight line L2 at each point is 0.2 mrad or less.

18. The interlayer film for laminated glass according to claim 2, wherein when, in a region B that has a size of 200 to 500 mm at least one region in a range of 100 to 600 mm from the one edge toward the other edge, a region is selected in a range of 50 mm toward one edge direction and the other edge direction from each point as a center, and an approximate straight line of the partial wedge angle in the region is taken as an approximate straight line L2 of the partial wedge angle of each point, a maximum absolute value of a difference between partial wedge angles with respect to the approximate straight line L2 at each point is 0.2 mrad or less.

19. The interlayer film for laminated glass according to claim 1, wherein
the interlayer film does not comprise a HUD display region, and
the difference of an average value of the partial wedge angle in a region from the one edge to the onboard sensor region toward the other edge of the interlayer film for laminated glass and an average value of the partial wedge angle in the onboard sensor region is 0.001 mrad or more.

20. The interlayer film for laminated glass according to claim 1 or 2, wherein
the interlayer film includes a colored region with a visible light transmittance of less than 60%, and
an average value of the partial wedge angle in the colored region is 0.6 mrad or less.

21. The interlayer film for laminated glass according to claim 1 or 2, wherein on at least one surface, a ten-point average roughness (Rzjis94) is 1 µm or more and less than 100 µm, and an absolute value of a difference between the maximum value and the minimum value of the ten-point average roughness is less than 40 µm.

22. Laminated glass comprising:
the interlayer film for laminated glass according to claim 1 or 2;
a first laminated glass member; and
a second laminated glass member,
wherein the interlayer film for laminated glass is arranged between the first laminated glass member and the second laminated glass member.

23. The laminated glass according to claim 22, wherein a difference between a thickness of the first laminated glass member and a thickness of second laminated glass member is 0.1 mm or more.

24. A method for producing the interlayer film for laminated glass according to claim 1 or 2, wherein the interlayer film for laminated glass is formed by extrusion molding.

25. A method for producing the laminated glass according to claim 22, wherein the laminated glass is obtained by sandwiching the interlayer film for laminated glass between the two laminated glass members and pressure-bonding the laminated glass members together.
